# EUROPEAN PATENT APPLICATION

(11) **EP 4 621 028 A1**
(43) Date of publication of application: **24.09.2025**
(21) Application number: 24165695.8
(22) Date of filing: 22.03.2024
(51) Int. Cl.: C09K 11/06, G01N 21/64

(54) **FLUORESCENCE RECOVERY IN NANOGRAPHENE**

(71) Applicant: Max-Planck-Gesellschaft zur Förderung der Wissenschaften e.V., 80539 München (DE); Okinawa Institute of Science and Technology School Corporation, Kunigami-gun, Okinawa 904-0495 (JP)
(72) Inventor: LIU, Xiaomin, 55128 Mainz (DE); YANG, Qiqi, 55128 Mainz (DE); BONN, Mischa, 55128 Mainz (DE); NARITA, Akimitsu, Onna-son, Okinawa, 904-0495 (JP); KABE, Ryota, Onna-son, Okinawa, 904-0495 (JP)
(74) Representative: Huebner, Stefan Rolf

(57) **Abstract**

A method of returning a fluorophore molecule from its non-fluorescence-excitable state to its fluorescence-excitable state, the method comprising the step of supplying the fluorophore molecule with electromagnetic radiation to stimulate a transition from the non-fluorescence-excitable state to the fluorescence-excitable state. The fluorophore transitions from its fluorescence-excitable state to its non-fluorescence-excitable state by means of a twophoton ionisation. The fluorophore is a nanographene. Moreover, uses of a nanographene fluorophore as a fluorophore in stimulated emission depletion microscopy and in calibrating a fluorescence imaging apparatus. Further, a recoverable fluorescence material comprising the fluorophore.

## Description

### Field of the invention

The invention relates to a method of manipulating a nanographene fluorophore in its - fluorescence-excitable state and method of improving the fluorescence of a plurality of nanographene fluorophore molecules. The invention moreover relates to a method of generating fluorescence with nanographene fluorophore molecule(s) and uses of a nanographene fluorophore. The invention further relates to a method of transitioning a fluorophore from its fluorescence-excitable state to its non-fluorescence-excitable state and returning it to its fluorescence-excitable state. The invention also relates to a fluorescent material.

### Background of the invention

Fluorophores are widely employed in microscopy. This includes microscopy methods in which the fluorophores serve to increase the resolution of the microscope and even achieve super-resolution, ie a resolution higher than that imposed by the Abbe limit, which is due to the diffraction of light. For example, in Stimulated Emission Depletion microscopy (STED) a Gaussian-shaped spot produced by an excitation beam scans the surface of a sample. A red-shifted, typically doughnut-shaped spot of a depletion beam that suppresses fluorescence is superimposed coaxially on the excitation beam, thereby minimizing the area of spontaneous fluorescence. Thus, the depletion beam narrows the focal point spread function (PSF) of the fluorescent light, thereby increasing the resolution.

Fluorophores tend to lose their ability to fluoresce, typically after several excitations, which is also referred to as photo-quenching. It is believed that in many cases photo-quenching is due to a decomposition of the fluorophores induced by the light used to excite the fluorophore to fluoresce. If the decomposition is permanent so is the loss of fluorescence.

The loss of fluorescence affects the imaging quality, especially the ability to perform long-term or 3D imaging. Protective agents, eg commercially available anti-fading agents, are therefore customarily needed as a stabilizer to inhibit rapid photo-quenching of the fluorophores which can limit the applicable imaging environment.

Duan et al in "Structural Evidence for a Two-Regime Photobleaching Mechanism in a Reversibly Switchable Fluorescent Protein", J Am Chem Soc 2013, 135, 15841-15850 report that at least in some reversibly swichable fluorescent proteins, oxidation of two sulfur-containing residues may be involved in photobleaching and the related effect of photofatigue.

Sinnecker et al in "Reversible Photobleaching of Enhanced Green Fluorescent Proteins", Biochemistry 2005, 44, 7085-7094 have shown in that in certain variants of the Green Fluorescence Protein such photo-bleaching is partly reversible.

Teki in "Excited-State Dynamics of Non-Luminescent and Luminescent pi-Radicals", Chem Eur J 2020, 26, 980 - 996 discusses recent findings regarding the dynamics of excited states of bot luminescent and non-luminescent π-radicals and their application.

Horewitz et al in "Spin Polarization Transfer from a Photogenerated Radical Ion Pair to a Stable Radical Controlled by Charge Recombination", J Phys Chem A 2017, 121, 4455-4463 report results of photoexcitation experiments with a particular electron donor-acceptor molecule, referred to as BDPA•-mPD-ANI-NDI.

Yamada et al in "Laser Two-Photon Ionization for Determination of Aromatic Molecules in Solution", Anal Cham 1983, 55, 1914-1917 report laser two-photon Ionization of aromatic molecules such as pyrene, tetraphene, chrysene, anthracene, anthracene derivatives, ZV-phenyl-1 -naphthylamlne, benzophenone, and 4,4"'-bls[(2-butyloctyl)oxy]-p-quaterphenyl In solution.

Ogawa et al in "Two-Photon Ionization Efficiency of Pyrene and Several Aromatic Compounds at 240, 266 and 299 nm and Its Analytical Applications", Analytical Sciences, September 2000, VOL. 16 report laser two-photon ionization experiments performed on pyrene and several aromatic compounds.

Constapel et al in "Atmospheric-pressure laser ionization: a novel ionization method for liquid chromatography/mass spectrometry", Rapid Commun Mass Spectrom 2005; 19: 326-336 report a two-photon ionisation of polycyclic aromatic hydrocarbons with a new laser source.

Tiäner et al in "Identification of 7e9 ring polycyclic aromatic hydrocarbons in coals and petrol coke using High performance liquid chromatography - Diode array detection coupled to Atmospheric pressure laser ionization - Mass spectrometry (HPLC-DAD-APLI-MS)+", Environmental Pollution, 252 (2019), 723-732 report of successful detection of polycyclic aromatic hydrocarbons in coals that exploits a 1+1 resonance enhanced multiphoton ionization process.

### Object of the invention

It is an object of the present invention to provide a new method of manipulating a nanographene fluorophore in its -fluorescence-excitable state and a new method of improving the fluorescence of a plurality of nanographene fluorophore molecules. The invention moreover seeks to provide a new method of generating fluorescence with nanographene fluorophore molecule(s) and new uses of a nanographene fluorophore. It is a further object of the invention to provide a new method of transitioning a fluorophore from its fluorescence-excitable state to its non-fluorescence-excitable state and returning it to its fluorescence-excitable state. The invention also seeks to provide a new recoverable fluorescent material.

### Solution according to the invention

In the following, any reference to one (including the articles "a" and "the"), two or another number of objects is, provided nothing else is expressly mentioned, meant to be understood as not excluding the presence of further such objects in the invention. The reference numerals in the patent claims are not meant to be limiting but merely serve to improve readability of the claims.

Herein, provided that no indication to the contrary is provided, the nomenclature as discussed by Rassmussen in "The nomenclature of fused-ring arenes and heterocycles: a guide to an increasingly important dialect of organic chemistry", ChemTexts (2016) 2:16 is adhered to. The relevant content of this document is incorporated into the present disclosure by reference.

According to a first aspect of the invention, the problem is solved by a method of returning a nanographene fluorophore molecule from its non-fluorescence-excitable state to its fluorescence-excitable state of claim 1. The method comprises the step of supplying the fluorophore molecule with electromagnetic radiation to stimulate a transition from the non-fluorescence-excitable state to the fluorescence-excitable state.

The transition can occur directly or indirectly via an intermediate state. Again without limiting the present invention to any particular theory, the inventors believe that the transition typically occurs via an excited state as the intermediate state.

In the context of the present invention, a **fluorescence-excitable state** is of a fluorophore is a state in which it can be excited by electromagnetic radiation of an excitation wavelength, to assume an excited state from which it spontaneously returns to the fluorescence-excitable state by emitting fluorescence light, ie, fluorescing. Fluorophores tend to lose their ability to fluoresce, typically after several excitations, which is also referred to as photo- quenching. In the context of the present invention, the fluorophore's state in which it has lost its ability to fluoresce is referred to as a **non-fluorescence-excitable state.** In the following, the transition from the non-fluorescence-excitable state to the fluorescence-excitable state is also referred to as **recovery** or **reactivation;** these two terms are used synonymously herein. A material capable of recovery is in the following referred to as a recoverable material.

In the context of the present invention, the term electromagnetic radiation includes but is not limited to visible, infrared and ultraviolet light. In the context of the present invention, the term **light** encompasses electromagnetic radiation with a wavelength between 100 nm (nanometres) and 1 mm (millimetre).

In the context of the present invention, a **nanographene** fluorophore molecule is defined as a substituted or unsubstituted polycyclic aromatic hydrocarbon comprising three or more substituted and/or unsubstituted aromatic hydrocarbon rings, wherein each of at least three of the three or more substituted and/or unsubstituted aromatic hydrocarbon rings is fused with at least another one of the at least three substituted and/or unsubstituted aromatic hydrocarbon rings. This means, if the compound comprises three aromatic hydrocarbon rings that each of the three aromatic hydrocarbon rings is fused with at least another one of the three aromatic hydrocarbon rings, ie, that each of the three aromatic hydrocarbon rings shares with at least another one of the three aromatic hydrocarbon rings two neighbouring carbon atoms. However, if the compound comprises more than three aromatic hydrocarbon rings, such as ten aromatic hydrocarbon rings, then each of at least three of the ten aromatic hydrocarbon rings, such as of seven of the ten aromatic hydrocarbon rings is fused with at least another one of the seven aromatic hydrocarbon rings, whereas the remaining three hydrocarbon rings are not fused with any other aromatic hydrocarbon ring. Consequently, if the compound comprises more than three aromatic hydrocarbon rings, each of the aromatic hydrocarbon rings may be fused with at least another one or only some (namely three to all but one) of the aromatic hydrocarbon rings may be fused with at least another one. All in all, the compound used in accordance with the present invention comprises a unit of at least three aromatic hydrocarbon rings, which are fused with each other.

Herein, the term **polycyclic aromatic hydrocarbon** denotes in accordance with the present invention an organic molecule, which comprises at least two aromatic rings, ie, at least two cyclic and aromatic rings, in which electrons are delocalized. Hydrocarbon means in this connection an organic molecule, which consists entirely of carbon and hydrogen atoms. Thus, an **unsubstituted** polycyclic aromatic hydrocarbon means in accordance with the present invention a molecule which consists entirely of carbon and hydrogen atoms, whereas a **substituted** polycyclic aromatic hydrocarbon is a molecule, in which one or more up to all hydrogen atoms of an unsubstituted polycyclic aromatic hydrocarbon molecule are replaced by any other atom and/or organic group and/or in which one or more of the carbon atoms are replaced by a heteroatom, such as nitrogen, oxygen, phosphorous, sulphur, boron or the like. Likewise to this, an unsubstituted aromatic hydrocarbon ring means an aromatic hydrocarbon ring which consists entirely of carbon and hydrogen atoms, whereas a substituted aromatic hydrocarbon ring is an aromatic hydrocarbon ring, in which one or more up to all hydrogen atoms of an unsubstituted aromatic hydrocarbon ring are replaced by any other atom and/or organic group and/or in which one or more of the carbon atoms are replaced by a heteroatom.

Without limiting the present invention to any particular theory, the inventors currently believe that the mechanism that provides for reversible photo- quenching of nanographene involves a reversible loss of an electron of the nanographene. In other words, the nanographene assumes a stable but reversible radical cationic state. The inventors believe that by sharing their electrons, the nanographene's multiple fused aromatic rings delocalize these electrons and thus reduce their spin density to a degree sufficient for stabilizing the nanographene's radical cationic state. When supplying the radical cationic state with electromagnetic radiation, the cation recombines with an electron from the environment.

The first aspect of the invention is based on the inventors' finding that nanographenes can enter a stable state in which they are non-fluorescence-excitable, and that they can return from this stable state to their fluorescence-excitable state. In this context, **stable** means that the transition from the stable non-fluorescence-excitable state to the fluorescence excitable state occurs on a timescale that is at least two orders of magnitude larger than the time scale of the spontaneous transition from the excited to the fluorescence-excitable state, ie, the half-life of the non-fluorescence-excitable state is at least 100 times larger than that of the excited state. This aspect of the invention is moreover based on the inventors' finding that such transition of nanographenes from the stable non-fluorescence-excitable state to the fluorescence-excitable state can be triggered externally by applying electromagnetic radiation to the nanographene when it is in its non-fluorescence-excitable state.

According to a second aspect of the invention, the problem is solved by a method of improving the fluorescence of a plurality of nanographene fluorophore molecules with the features of claim 2. Some of which fluorophore molecules are in their non-fluorescence-excitable state, and the method comprises the step of supplying the fluorophore molecules with electromagnetic radiation to stimulate in one or more of the fluorophore molecules that are in their non-fluorescence-excitable state a transition from the non-fluorescence-excitable state to the fluorescence-excitable state.

This aspect of the invention is based on the inventors' insight that returning nanographene molecules to their fluorescence-excitable state can be used to improve the fluorescence of a plurality of nanographene fluorophore molecules if some of these are in their non-fluorescence-excitable state. As set out in further detail bellow, this can be used, for example, to improve reproducibility of fluorescence microscopy studies.

According to another aspect of the invention, the problem is solved by a method of generating fluorescence with nanographene fluorophore molecule(s) with the features of claim 4. The method comprises the step of irradiating the fluorophore molecule(s) with electromagnetic radiation at an excitation wavelength suitable for exciting the fluorophore molecule(s) to fluoresce if in its/their fluorescence-excitable state. The method moreover comprises the step of irradiating the fluorophore molecule(s) with electromagnetic radiation at a recovery wavelength suitable for returning the fluorophore molecule(s) to its/their fluorescence-excitable state if in its/their non-fluorescence-excitable state. These two steps can be performed simultaneously, or in any order one after the other or overlapping.

According to yet another aspect of the invention, the problem is solved by the use of a nanographene fluorophore according to claim 8. The nanographene fluorophore is used in stimulated emission depletion microscopy.

In the context of the present invention, **stimulated emission depletion microscopy (STED microscopy)** is a method in which a spot on a sample containing the fluorophore is excite by irradiating excitation light. At the same time, part of the sample, including part of the spot that is irradiated with excitation light, is irradiated with light at a STED wavelength (hereafter also referred to as **STED light)** that effects an excited fluorophore to return to its unexcited stated by means of stimulated photon emission at the wavelength of the STED light. The wavelength(s) of the STED light and thus also the light produced by the stimulated emission is chosen do be distinguishable from the wavelength(s) of the fluorescence light so that the two lights can be told apart. The stimulated emission prevents fluorescence of excited fluorophores via spontaneous emission so that fluorescence is reduced or even entirely impeded in fluorophores that are irradiated with both excitation light and STED light. As a result, it is achievable that fluorescence is mostly or even completely limited to fluorophores at the region of the spot of excitation light that is not simultaneously irradiated with STED light.

This aspect of the invention is based on the inventors' insight that the ability of the nanographene fluorophore to be returned to their fluorescence-excitable state can improve STED microscopy. In particular, with this aspect of the invention it is achievable to ameliorate the problem of photo-quenching induced diminishing fluorescence when the same spot of a sample is repeatedly probed with STED microscopy. It is also achievable with this aspect of the invention to increase the intensity of the excitation light and thus the amount of fluorescence light in STED microscopy.

According to a further aspect of the invention, the problem is solved by the use of a nanographene fluorophore according to claim 10. The nanographene fluorophore is used as a fluorophore in calibrating a fluorescence imaging apparatus.

This aspect of the invention exploits the fact that by means of effecting recovery of the fluorophore, the fluorophore can be set to a well-defined state, and the density of fluorescence-excitable fluorophores in a sample of fluorophores is well-predictable. Such samples with a well-predictable density of fluorescence-excitable fluorophores lend themselves to calibration methods in which this density is used as a parameter.

According to another aspect of the present invention, the problem is solved by the method according to claim 11. The method comprising the steps of: transitioning a fluorophore from its fluorescence-excitable state to its non-fluorescence-excitable state by means of absorbing two photons; and returning the fluorophore molecule from its non-fluorescence-excitable state to its fluorescence-excitable state by supplying the fluorophore molecule with electromagnetic radiation to stimulate a transition from the non-fluorescence-excitable state to the fluorescence-excitable state.

According to another aspect of the present invention, the problem is solved by a recoverable fluorescence material according to claim 12. The material comprises a fluorophore.

It is an achievable advantage of the beads according to this aspect of the invention that they allow for conveniently providing the nanographene for their use, such as performing the before-mentioned methods and uses of such fluorophore molecules.

### Preferred embodiments of the invention

Preferred features of the invention which may be applied alone or in combination are discussed in the following and in the dependent claims.

The preferred fluorophore molecule is a nanographene. The preferred fluorophore can be transitioned from its fluorescence-excitable state to its non-fluorescence-excitable state by means of a two-photon ionisation. The preferred fluorophore molecule can be returned its non-fluorescence-excitable state to its fluorescence-excitable state by supplying the fluorophore molecule with electromagnetic radiation to stimulate a transition from the non-fluorescence-excitable state to the fluorescence-excitable state.

In a preferred method according to the invention, the fluorophore is transitioned from its fluorescence-excitable state to its non-fluorescence-excitable state by means of absorbing two photons, more preferably by a two-photon ionisation. In the context of the present invention, **two-photon ionisation** refers to a process in which a fluorophore molecule loses an electron in a process in which the molecule is excited as a result of a two-photon absorption.

In a preferred method according to the invention, the nanographene fluorophore molecule is returned from its non-fluorescence-excitable state to its fluorescence-excitable state. Preferably, the fluorophore molecule is returned from its non-fluorescence-excitable state to its fluorescence-excitable state by means of absorbing one photon. Preferably, the nanographene fluorophore molecule(s) is/are supplied with electromagnetic radiation to stimulate a transition from the non-fluorescence-excitable state to the fluorescence-excitable state. Preferably the fluorophore molecule(s) is/are irradiated with electromagnetic radiation to stimulate such transition. This aspect of the invention exploits the fact that electromagnetic radiation can be used to stimulate the transition from the non-fluorescence-excitable state to the fluorescence-excitable state.

The preferred electromagnetic radiation the fluorophore molecule(s) is/are irradiated with to stimulate the transition from the non-fluorescence-excitable state to the fluorescence-excitable state is light, hereafter also referred to as **recovery light.** The wavelength of the recovery light preferably is greater than 300 nm, more preferably greater than 350 nm, even more preferably greater than 400 nm. The wavelength of the recovery light preferably is less than 2500 nm, more preferably less than 2000 nm, even more preferably less than 1600 nm. It is an achievable advantage of this embodiment of the invention that the recovery light can be manipulated with generally available optical lenses and mirrors. The invention also encompasses embodiments in which the recovery fluorophore molecule(s) is/are irradiated with a mixture of wavelength. This mixture of wavelength preferably includes, even more preferably consists of preferred wavelengths as set out above.

In a preferred method of generating fluorescence with the nanographene, the fluorophore molecules are irradiated with electromagnetic radiation at an excitation wavelength; and the fluorophore molecule(s) are irradiated with electromagnetic radiation at a recovery wavelength. In the context of the present invention, an **excitation wavelength** is a wavelength suitable for exciting the fluorophore molecule(s) to fluoresce if in its/their fluorescence-excitable state, and a **recovery wavelength** is a wavelength suitable for returning the fluorophore molecule(s) to its/their fluorescence-excitable state if in its/their non-fluorescence-excitable state.

The preferred electromagnetic radiation at the excitation wavelength is light. The wavelength of such excitation light preferably is greater than 300 nm, more preferably greater than 350 nm, even more preferably greater than 400 nm. The wavelength of the recovery light preferably is less than 2500 nm, more preferably less than 2000 nm, even more preferably less than 1600 nm. It is an achievable advantage of this embodiment of the invention that the excitation light can be manipulated with generally available optical lenses and mirrors. The invention also encompasses embodiments in which the fluorophore molecule(s) is/are irradiated with a mixture of wavelength for excitation. This mixture of wavelength preferably includes, even more preferably consists of preferred wavelengths as set out above.

In one embodiment of the invention, the recovery wavelength is different from the excitation wavelength. It is an achievable advantage of this embodiment of the invention that a recovery wavelength can be chosen at which the non-fluorescence-excitable state has a particularly great absorbance; as a result, recovery can be improved. It is another achievable advantage of this embodiment of the invention that an excitation wavelength can be chosen at which the fluorescence-excitable state has a particularly great absorbance; as a result, excitation can be improved.

In one embodiment of the invention, the fluorophore molecule(s) are irradiated with light of the excitation wavelength and the recovery wavelength at the same time. This can have the advantage that those fluorophore molecules that are in their fluorescence-excitable state can fluoresce while at the same time fluorophore molecules in their non-fluorescence-excitable state can be recovered. In particular, it can be avoided that the generation of fluorescence by irradiating the fluorophore molecule(s) at the excitation wavelength needs to be interrupted by recovery intervals in which the fluorophore molecule(s) are irradiated with electromagnetic radiation at the recovery wavelength. In another embodiment of the invention, the fluorophore molecule(s) are irradiated with light of the excitation wavelength and the recovery wavelength separately rather than simultaneously. This can have the advantage that the electromagnetic radiation at the recovery wavelength cannot interfere with fluorescence measurements, including fluoresces imaging as for example in fluorescence microscopy.

In one embodiment of the invention, the electromagnetic radiation at the recovery wavelength cannot excite fluorophore molecules that are in their fluorescence-excitable state to fluoresce. It is an achievable advantage of this embodiment of the invention that recovery cannot interfere with fluorescence. Preferably, this is achieved by choosing a recovery wavelength that is below any wavelength of the fluorescent light that can be emitted by the fluorophore molecule. This embodiment of the invention exploits the fact that light below the excitation wavelength normally cannot cause fluorescence.

Similarly, in one embodiment of the invention, the electromagnetic radiation at the excitation wavelength cannot or only at a low probability recover fluorophore molecules that are in their non-fluorescence-excitable state. Preferably, this is achieved by choosing an excitation wavelength that is within an interval low or even of essentially zero absorbance of the non-fluorescence-excitable state of the fluorophore molecule(s). Preferably, at the excitation wavelength, absorbance of the non-fluorescence-excitable state is less than 10⁻¹, more preferably less than 10⁻², even more preferably less than 10⁻³. It is an achievable advantage of this embodiment of the invention that the excitation does not interfere with the control of the recovery performed with the electromagnetic radiation at the recovery wavelength.

Yet, the inventors have found that a wavelength suitable for exciting the fluorophore molecule(s) to fluoresce if in its/their fluorescence-excitable state can also be suitable for returning the fluorophore molecule(s) to its/their fluorescence-excitable state if in its/their non-fluorescence-excitable state. Accordingly, in another embodiment of the invention, the electromagnetic radiation for excitation may also serve recovery. In other words, according to this embodiment of the invention, nanographene fluorophore molecule(s), are irradiated with electromagnetic radiation at one or more wavelengths (each of) which are both excitation and recovery wavelength in the sense that they can effect both, exciting the fluorophore molecule(s) to fluoresce if in its/their fluorescence-excitable state, and returning the fluorophore molecule(s) to its/their fluorescence-excitable state if in its/their non-fluorescence-excitable state. It is an achievable advantage of this embodiment of the invention that by doing away with the requirement of electromagnetic radiation at a different frequency it can is can simplify the method.

In one embodiment of the invention in addition to electromagnetic radiation that can both excite and recover, the fluorophore molecule(s) are irradiated with electromagnetic radiation at a different wavelength that is only suitable for exciting the fluorophore molecule(s) to fluoresce if in its/their fluorescence-excitable state. It is an achievable advantage of this embodiment of the invention that excitation can be increased. Alternatively or in addition, in one embodiment of the invention besides the electromagnetic radiation that can both excite and recover, the fluorophore molecule(s) are irradiated with electromagnetic radiation at a different wavelength that is only suitable for recovering the fluorophore molecule(s) if in its/their non-fluorescence-excitable state. It is an achievable advantage of this embodiment of the invention that recovery can be increased.

It is achievable with the present invention that in a sample of multiple fluorescent molecules an equilibrium ratio is achieved between the fraction of fluorescence-excitable and the fraction of non-fluorescence-excitable fluorophore molecules. For example, in such equilibrium about 60 % of the fluorophore molecules of the sample are in their fluorescence-excitable state and 40 % are in their non-fluorescence-excitable state. The equilibrium can entail a near-constant degree of fluorescence of the sample. This, in turn can greatly increase reproducibility of fluorescence experiments. Accordingly, in a preferred embodiment of the invention the fraction of fluorescence-excitable and the fraction of non-fluorescence-excitable fluorophore molecules are at an equilibrium. Preferably the fraction of fluorophore molecules of in their fluorescence-excitable state is greater than 50 %, more preferably greater than 70 %, even more preferably greater than 90 %, even more preferably greater than 95 %.

Preferably, this equilibrium is maintained by irradiating the fluorophore molecules with electromagnetic radiation at an excitation wavelength and electromagnetic radiation at a recovery wavelength at a constant ratio. This can happen for example simultaneously or alternatingly.

Preferably, the nanographene fluorophore is used in microscopy. Particularly preferably it is use in a microscopy methods in which the fluorophores can serve to increase the resolution of the microscope, for example STED microscopy.

Preferably, when the nanographene or photo-recoverable fluorophore is used as the fluorophore in STED microscopy, the wavelength of the STED light is chosen to have a recovery wavelength suitable for returning the fluorophore molecule(s) to its/their fluorescence-excitable state if in its/their non-fluorescence-excitable state. It is an achievable advantage of this embodiment of the invention that the STED light can double as recovery light. Yet, the present invention also, ia, encompasses embodiments in which the sample is irradiated with recovery light in addition to the STED light, the wavelength of the recovery light being different form that of the STED light. Preferably, STED microscopy is performed with the fraction of fluorescence-excitable and the fraction of non-fluorescence-excitable fluorophore molecules is at an equilibrium as discussed above.

Preferably, the nanographene fluorophore is used as a fluorophore in calibrating a fluorescence imaging apparatus. In one embodiment of the invention, this use comprises a preparation step which includes irradiating the fluorophore molecules with electromagnetic radiation at a recovery wavelength.

Preferably, this recovery steps precedes a calibration step which includes irradiating the fluorophore molecules with electromagnetic radiation at an excitation wavelength. Thereby, it can be achieved that before calibration, the fluorophore molecule(s) are at a well-defined ratio between the fraction of fluorescence-excitable and the fraction of non-fluorescence-excitable fluorophore molecules. Preferably the fraction of fluorophore molecules of in their fluorescence-excitable state is greater than 80 %, more preferably greater than 90 %, even more preferably greater than 95 %, even more preferably greater than 98 %. Alternatively or in addition, calibration is performed when the fraction of fluorescence-excitable and the fraction of non-fluorescence-excitable fluorophore molecules are at an equilibrium as discussed further above.

A preferred nanographene fluorophore molecule is a substituted or unsubstituted polycyclic aromatic hydrocarbon comprising four or more, more preferably five or more, more preferably six or more, more preferably seven or more substituted and/or unsubstituted aromatic hydrocarbon rings.

In the nanographene fluorophore molecule preferably each of at least four - more preferably each of at least five, more preferably each of at least six - of the substituted and/or unsubstituted aromatic hydrocarbon rings is fused with at least another one of the beforementioned at least four, at least five or at least six substituted and/or unsubstituted aromatic hydrocarbon rings.

Preferably, the compound to be used in the present invention comprises three to 91 substituted and/or unsubstituted aromatic hydrocarbon rings, wherein each of at least three of the three to 91 substituted and/or unsubstituted aromatic hydrocarbon rings is fused with at least another one of the at least three substituted and/or unsubstituted aromatic hydrocarbon rings. Thus, either each of all of the three to 91 substituted and/or unsubstituted aromatic hydrocarbon rings are fused with at least another one of the at least three substituted and/or unsubstituted aromatic hydrocarbon rings, or three to less than all of the three to 91 substituted and/or unsubstituted aromatic hydrocarbon rings are fused with at least another one of the at least three substituted and/or unsubstituted aromatic hydrocarbon rings.

In a further development of the present invention, it is proposed that the compound used in accordance with the present invention is an organic compound comprising any of the below units:
- -Ar₁(Ar₂)ₓ-, wherein the residues Ar₁ and Ar₂ are the same or different and independently from each other a substituted and/or unsubstituted aromatic hydrocarbon ring and x is in an integer of 5, 6 (only possible in the case that Ar₁ is at least a C₆-ring) or 7 (only possible in the case that Ar₁ is at least a C₇-ring), ie - Ar₁(Ar₂)ₓ-is an unit, in which an aromatic hydrocarbon ring Ar₁ is fused with x aromatic hydrocarbon rings Ar₂,
- -Ar₁(Ar₂)ₓ-Ar₃(Ar₄)_{y}-, wherein the residues Ar₁ to Ar₄ are the same or different and independently from each other a substituted and/or unsubstituted aromatic hydrocarbon ring and x and y are independently from each other integers of 1 to 5 or 6 (only possible in the case that Ar₁/ Ar₃ is at least a C₆-ring) or 7 (only possible in the case that Ar₁/Ar₃ is at least a C₇-ring), wherein the sum of x and y is at least 4, or
- -Ar₁(Ar₂)ₓ-Ar₃(Ar₄)_{y}-Ar₅(Ar₆)_{z}-, wherein the residues Ar₁ to Ar₆ are the same or different and independently from each other a substituted and/or unsubstituted aromatic hydrocarbon ring and x, y and z are independently from each other integers of 1 to 5 or 6 (only possible in the case that Ar₁/Ar₃/Ar₅ is at least a C₆-ring) or 7 (only possible in the case that Ar₁/Ar₃/Ar₅ is at least a C₇-ring), the sum of x, y and z is at least 3, or
- -Ar₁-(Ar₂)ₙ-Ar₃-, wherein the residues Ar₁ to Ar₃ are the same or different and independently from each other a substituted and/or unsubstituted aromatic hydrocarbon ring and n is an integer of 4 to 14, wherein all aromatic hydrocarbon rings may form a ring, ie Ar₁ and Ar₃ in the formula may be bonded or even fused with each other.

The present invention is not particularly limited concerning the type of aromatic hydrocarbon rings. Good results are particularly obtained with five-membered, six-membered and/or seven-membered aromatic rings, which may be each substituted and/or unsubstituted. Suitable examples for aromatic hydrocarbon rings of the compound to be used in the present invention are those selected from the group consisting of unsubstituted pyrrole rings, unsubstituted furan rings, unsubstituted thiophene rings, unsubstituted imidazole rings, unsubstituted pyrazole rings, unsubstituted oxazole rings, unsubstituted isoxazole rings, unsubstituted thiazole rings, unsubstituted isothiazole rings, unsubstituted benzene rings, unsubstituted pyridine rings, unsubstituted triazine rings, unsubstituted thiophene rings, unsubstituted azepine rings, unsubstituted oxepine rings, unsubstituted thiepine rings, substituted pyrrole rings, substituted furan rings, substituted thiophene rings, substituted imidazole rings, substituted pyrazole rings, substituted oxazole rings, substituted isoxazole rings, substituted thiazole rings, substituted isothiazole rings, substituted benzene rings, substituted pyridine rings, substituted triazine rings, substituted thiophene rings, substituted azepine rings, substituted oxepine rings and substituted thiepine rings.

For instance, each of substituted and/or unsubstituted aromatic hydrocarbon rings of the compound to be used may be a substituted benzene ring or an unsubstituted benzene ring. Preferably, the compound to be used in accordance with the present invention consists of three to 91 substituted and/or unsubstituted aromatic hydrocarbon rings, wherein each of the three to 91 substituted and/or unsubstituted aromatic hydrocarbon rings is fused with at least another one of the three to 91 substituted and/or unsubstituted aromatic hydrocarbon rings, and wherein each of the outer carbon atoms, ie of the carbon atoms with a free valency, may be substituted or unsubstituted.

Exemplary polycyclic aromatic hydrocarbons of this embodiment are:

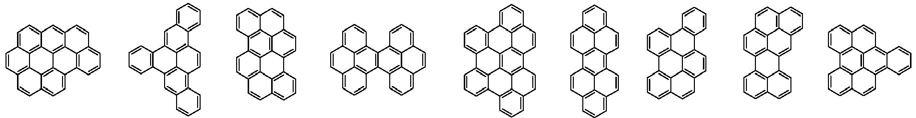

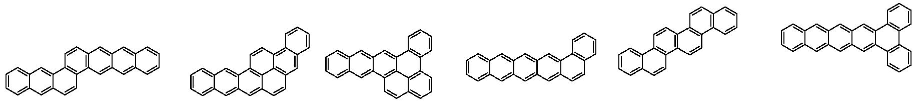

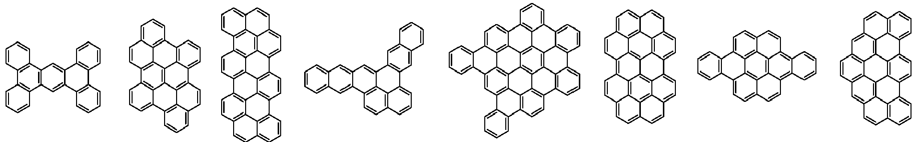

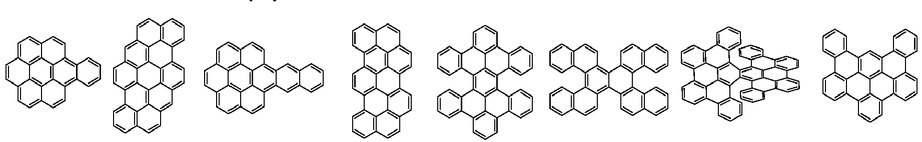

All of the rings of the above mentioned compounds are benzene rings. Any of the hydrogen atoms of the aforementioned formulae may be substituted by a substituent, such as a C₁₋₂₀-alkyl group, a C₁₋₂₀-alkenyl group, a C₁₋₂₀-alkynyl residue, C₁₋₂₀-alkoxy group, halogen atom, a C₄₋₂₀-cycloalkyl group, a C₄₋₂₀-heterocyclic group and particularly heteroaryl group, a nitro group, an amino group and/or a cyanoe group. Specific examples are decylphenyl, methoxyphenyl and nitrophenyl. The syntheses of these compounds are described by Klockenkämper et al., "Chemical Analysis: A Series of Monographs on Analytical Chemistry and Its Applications", Wiley-Interscience, August 14, 2000, by Dötz et al., "Synthesis of Large Polycyclic Aromatic Hydrocarbons: Variation of Size and Periphery", J. Am. Chem. Soc., 2000, volume 122, pages 7707 to 7717, by Kübel et al., "Synthesis and crystal packing of large polycyclic aromatic hydrocarbons: hexabenzo[bc,ef,hi,kl,no,qr]coronene and dibenzo[fg,ij]phenanthro[9,10,1,2,3-pqrst]pentaphene", J. Mater. Chem. 2000, volume 10, pages 879 to 886 and by Li et al., "Recent Progress in Chemistry of Multiple Helicenes", Chem. Asian J., 2018, volume 13, pages 884 to 894.

Good results are in particular obtained, when the compound to be used comprises a unit with the general formula (1) or the compound has the general formula (1): 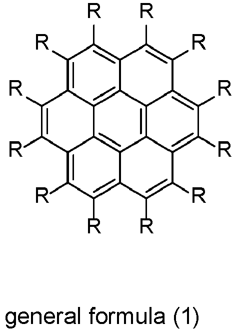 wherein in general formula (1) the residues R are the same or different and independently from each other a hydrogen atom, an unsubstituted C₁₋₂₀ hydrocarbon residue, a substituted C₁₋₂₀ hydrocarbon residue, a halogen, an azide group, a hydroxy group, a nitro group, an amino group, a formyl group, a cyano group or one or more of two adjacent residues R are linked with each other to form an aromatic group, a cycloaliphatic group or a heterocyclic goup. Any of the unsubstituted and/or substituted C₁₋₂₀ hydrocarbon residues may be an unsubstituted alkyl group, a substituted alkyl group, an unsubstituted alkenyl group, a substituted alkenyl group, an unsubstituted alkynyl group, a substituted alkynyl group, an unsubstituted alkoxy group, a substituted alkoxy group, an unsubstituted cycloalkyl group, a substituted cycloalkyl group, an unsubstituted aryl group, a substituted aryl group, an unsubstituted aralkyl group, a substituted aralkyl group, an unsubstituted hetaryl group, a substituted hetaryl group, a carboxylic acid group, a carboxylic ester group, an (alkyl or aryl)silyl group or a group formed in that two of adjacent residues residues of R₁ to R₈ and Ar are linked with each other to form an aromatic, heteroaromatic, cyclic or heterocyclic group. In particular, any of the unsubstituted and/or substituted C₁₋₂₀ hydrocarbon residues may be a C₁₋₂₀-alkyl group, C₁₋₂₀-alkoxy group, a C₁₋₂₀-alkenyl group, a C₁₋₂₀-alkynyl group, a C₄₋₂₀-cycloalkyl group, a C₅₋₂₀-aromatic group, a C₄₋₂₀-cycloaliphatic group or a C₅₋₂₀-heterocyclic goup. One or more of two adjacent residues R may be in particular linked with each other to form a C₅₋₂₀-aromatic group, a C₄₋₂₀-cycloaliphatic group or a C₅₋₂₀-heterocyclic goup and preferably a C₅₋₇-aromatic group, a C₆₋₈₀-cycloaliphatic group or a C₅₋₇-heterocyclic goup.

In accordance with a particularly preferred embodiment of the present invention, the compound to be used comprises a unit with the general formula (2) or the compound to be used has the general formula (2): 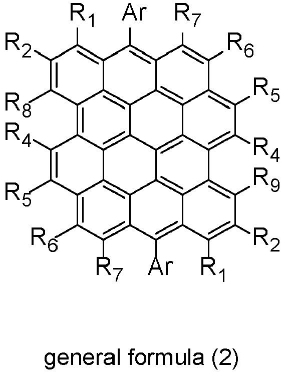 wherein in general formula (2):
residues R₁ to R₈ and Ar are independently from each other selected from the group consisting of hydrogen, unsubstituted alkyl groups, substituted alkyl groups, unsubstituted alkenyl groups, substituted alkenyl groups, unsubstituted alkynyl groups, substituted alkynyl groups, unsubstituted alkoxy groups, substituted alkoxy groups, unsubstituted cycloalkyl groups, substituted cycloalkyl groups, unsubstituted aryl groups, substituted aryl groups, unsubstituted aralkyl groups, substituted aralkyl groups, unsubstituted hetaryl groups, substituted hetaryl groups, azide groups, hydroxy groups, nitro groups, amino groups, formyl groups, carboxylic acid groups, carboxylic ester groups, cyano groups, (alkyl or aryl)silyl groups and groups formed in that two of adjacent residues residues of R₁ to R₈ and Ar are linked with each other to form an aromatic, heteroaromatic, cyclic or heterocyclic group. The skeleton of this formula, ie the fused benzene residues or aromatic core structure, respectively, without the residues R₁ to R₈ and Ar, is subsequently also referred to as DBOV as abbreviation for dibenzo[hi,st]ovalene.

Each of both residues R₁ are the same, each of both residues R₂ are the same, each of both residues R₃ are the same, each of both residues R₄ are the same, each of both residues R₅ are the same, each of both residues R₆ are the same and each of both residues R₇ are the same, whereas residues R₁ may be the same or different to the other residues, residues R₂ may be the same or different to the other residues and so forth.

Preferably, the residues R in the general formula (1) and in particular the residues R₁ to R₈ and Ar in the general formula (2) are independently from each other selected from the group consisting of hydrogen; unsubstituted linear or branched C₁₋₃₀-alkyl groups; substituted linear or branched C₁₋₃₀-alkyl groups whose hydrocarbon chain is interrupted by one or more -O-, - S-, -NR'- with R' being C₁₋₃₀-alkyl, C₁₋₃₀-alkenyl, C₁₋₃₀-alkynyl, C₁₋₃₀-alkoxy, C₆₋₂₀-aryl, C₆₋₂₀-heteroaryl, -CO- and/or -SO- groups; linear or branched C₁₋₃₀-alkyl groups whose hydrocarbon chain is monosubstituted or polysubstituted with a carboxyl group, a sulfo group, a hydroxyl group, a cyano group, a C-C-alkoxy group and/or with a 5- to 7-membered heterocyclic group which is bonded via a nitrogen atom to the hydrocarbon chain; trialkylsilyl alkynyl groups; unsubstituted C₃₋₃₀-cycloalkyl groups; substituted C₁₋₃₀-cycloalkyl groups whose hydrocarbon chain is interrupted by one or more -O-, -S-, -NR'- with R' being C₁₋₃₀-alkyl, C₁₋₃₀-alkenyl, C₁₋₃₀-alkynyl, C₁₋₃₀-alkoxy, C₆₋₂₀-aryl, C₆₋₂₀-heteroaryl, -CO- and/or -SO-groups; linear or branched C₁₋₃₀-cycloalkyl groups whose hydrocarbon chain is monosubstituted or polysubstituted with a carboxyl group, a sulfo group, a hydroxyl group, a cyano group, a C-C-alkoxy group and/or with a 5- to 7-membered heterocyclic group which is bonded via a nitrogen atom to the hydrocarbon chain; phenyl groups; naphthyl groups; anthryl groups; pyrenyl groups; phenyl-, naphthyl-, anthryl- or pyrenyl-groups being monosubstituted or polysubstituted with C₁₋₁₈-alkyl, C₁₋₁₈-alkoxy, halogen, hydroxyl, cyano, carboxyl, -CONHR with R being C₁₋₃₀-alkyl, C₁₋₃₀-alkenyl, C₁₋₃₀-alkynyl, C₁₋₃₀-alkoxy, C₆₋₂₀-aryl or C₆₋₂₀-heteroaryl, -NHCOR with R being C₁₋₃₀-alkyl, C₁₋₃₀-alkenyl, C₁₋₃₀-alkynyl, C₁₋₃₀-alkoxy, C₆₋₂₀-aryl, C₆₋₂₀-heteroaryl; azide groups and groups formed in that two of adjacent residues residues of R₁ to R₈ and Ar are linked with each other to form an aromatic, heteroaromatic, cyclic or heterocyclic group.

More preferably, the residues R in the general formula (1) and in particular the residues R₁ to R₈ and Ar in the general formula (2) are independently from each other selected from the group consisting of hydrogen, unsubstituted linear or branched C₁₋₃₀-alkyl groups, unsubstituted linear or branched C₁₋₃₀-alkoxy groups, unsubstituted C₃₋₃₀-cycloalkyl groups, phenyl groups, naphthyl groups, anthryl groups, pyrenyl groups, azide groups, polyethylene groups with 2 to 20 ethylene moieties, phenyl ethylene, triisopropylsilyl ethynyl, trimethylsilyl ethynyl, and groups formed in that two of adjacent residues residues of R₁ to R₈ and Ar are linked with each other to form an aromatic, heteroaromatic, cyclic or heterocyclic group.

Specific examples for the residues R in the general formula (1) and in particular the residues R₁ to R₈ and Ar in the general formula (2) are:
Hydrogen, methyl, ethyl, propyl, isopropyl, butyl, isobutyl, tert-butyl, pentyl, isopentyl, neopentyl, *tert*-pentyl, hexyl, 2-methylpentyl, heptyl, 1-ethylpentyl, octyl, 2-ethylhexyl, isooctyl, nonyl, isononyl, decyl, isodecyl, undecyl, dodecyl, tridecyl, isotridecyl, tetradecyl, pentadecyl, hexadecyl, heptadecyl, octadecyl, nonadecyl and eicosyl (the above names isooctyl, isononyl, isodecyl and isotridecyl are trivial names and originate from the alcohols obtained by the oxo synthesis); 2-methoxyethyl, 2-ethoxyethyl, 2-propoxyethyl, 2-isopropoxyethyl, 2-butoxyethyl, 2- and 3-methoxypropyl, 2- and 3-ethoxypropyl, 2- and 3-propoxypropyl, 2- and 3-butoxypropyl, 2- and 4-methoxybutyl, 2- and 4-ethoxybutyl, 2- and 4-propoxybutyl, 3,6-dioxaheptyl, 3,6-dioxaoctyl, 4,8-dioxanonyl, 3,7-dioxaoctyl, 3,7-dioxanonyl, 4,7-dioxaoctyl, 4,7-dioxanonyl, 2- and 4-butoxybutyl, 4,8-dioxadecyl, 3,6,9-trioxadecyl, 3,6,9-trioxaundecyl, 3,6,9-trioxadodecyl, 3,6,9,12-tetraoxatridecyl and 3,6,9,12-tetraoxatetradecyl; 2-methylthioethyl, 2-ethylthioethyl 2-propylthioethyl, 2-isopropylthioethyl, 2-butylthioethyl, 2- and 3-methylthiopropyl, 2- and 3-ethylthiopropyl, 2- and 3-propylthiopropyl, 2- and 3-butylthiopropyl, 2- and 4-methylthiobutyl, 2- and 4-ethylthiobutyl, 2- and 4-propylthiobutyl, 3,6-dithiaheptyl, 3,6-dithiaoctyl, 4,8-dithianonyl, 3,7-dithiaoctyl, 3,7-dithianonyl, 2- and 4-butylthiobutyl, 4,8-dithiadecyl, 3,6,9-trithiadecyl, 3,6,9-trithiaundecyl, 3,6,9-trithiadodecyl, 3,6,9,12-tetrathiatridecyl and 3,6,9,12-tetrathiatetradecyl; 2-monomethyl- and 2-monoethylaminoethyl, 2-dimethylaminoethyl, 2- and 3-dimethylaminopropyl, 3-monoisopropylaminopropyl, 2- and 4-monopropylaminobutyl, 2 and 4-dimethylaminobutyl, 6-methyl-3,6-diazaheptyl, 3,6-dimethyl-3,6-diazaheptyl, 3,6-diazaoctyl, 3,6-dimethyl-3,6-diazaoctyl, 9-methyl-3,6,9-triazadecyl, 3,6,9-trimethyl-3,6,9-triazadecyl, 3,6,9-triazaundecyl, 3,6,9-trimethyl-3,6,9-triazaundecyl, 12-methyl-3,6,9,12-tetraazatridecyl and 3,6,9,12-tetramethyl-3,6,9,12-tetraazatridecyl; propan-2-on-1-yl, butan-3-on-1-yl, butan-3-on-2-yl and 2-ethylpentan-3-on-1-yl; 2-methylsulfonylethyl, 2-ethylsulfonylethyl 2-propylsulfonylethyl, 2-isopropylsulfonylethyl, 2-butylsulfonylethyl, 2- and 3-methylsulfonylpropyl, 2- and 3-ethylsulfonylpropyl, 2- and 3-propylsulfonylpropyl, 2- and 3-butylsulfonylpropyl, 2- and 4-methylsulfonylbutyl, 2- and 4-ethylsulfonylbutyl, 2- and 4-propylsulfonylbutyl and 4-butylsulfonylbutyl; carboxymethyl, 2-carboxyethyl, 3-carboxypropyl, 4-carboxybutyl, 5-carboxypentyl, 6-carboxyhexyl, 8-carboxyoctyl, 10-carboxydecyl, 12-carboxydodecyl and 14-carboxytetradecyl;
sulfomethyl, 2-sulfoethyl, 3-sulfopropyl, 4-sulfobutyl, 5-sulfopentyl, 6-sulfohexyl, 8-sulfooctyl, 10-sulfodecyl, 12-sulfododecyl and 14-sulfotetradecyl; 2-hydroxyethyl, 3-hydroxypropyl, 1-hydroxyprop-2-yl 2- and 4-hydroxybutyl, 1-hydroxybut-2-yl and 8-hydroxy-4-oxaoctyl;
cyanomethyl 2-cyanoethyl, 3-cyanopropyl, 2-methyl-3-ethyl-3-cyanopropyl, 7-cyano-7-ethylheptyl and 4,7-dimethyl-7-cyanoheptyl;
methoxy, ethoxy, propoxy, isopropoxy, butoxy, isobutoxy, *sec*-butoxy, *ter*t-butoxy, pentoxy, isopentoxy, neopentoxy, *tert*-pentoxy and hexoxy; carbamoyl, methylaminocarbonyl, ethylaminocarbonyl, propylaminocarbonyl, butylaminocarbonyl, pentylaminocarbonyl, hexylaminocarbonyl, heptylaminocarbonyl, octylaminocarbonyl, nonylaminocarbonyl, decylaminocarbonyl and phenylaminocarbonyl; formylamino, acetylamino, propionylamino and benzoylamino; chlorine, bromine and iodine; phenylazo, 2-naphthylazo, 2-pyridylazo and 2-pyrimidylazo; phenyl, 2-naphthyl, 2- and 3-pyrryl, 2-, 3- and 4-pyridyl, 2-,4- and 5-pyrimidyl, 3-, 4- and 5-pyrazolyl, 2-, 4- and 5-imidazolyl, 2-, 4- and 5-thiazolyl, 3-(1,2,4-triazyl), 2-(1,3,5-triazyl), 6-quinaldyl, 3-, 5-, 6- and 8-quinolinyl, 2-benzoxazolyl, 2-benzothiazolyl, 5-benzothiadiazolyl, 2- and 5-benzimidazolyl and 1- and 5-isoquinolyl; 2-, 3- and 4-methylphenyl, 2,4-, 2,5-, 3,5- and 2,6-dimethylphenyl, 2,4,6-trimethylphenyl, 2-, 3- and 4-ethylphenyl, 2,4-, 2,5-, 3,5- and 2,6-diethylphenyl, 2,4,6-triethylphenyl, 2-, 3- and 4-propylphenyl, 2,4-, 2,5-, 3,5- and 2,6-dipropylphenyl, 2,4,6-tripropylphenyl, 2-, 3- and 4-isopropylphenyl, 2,4-, 2,5-, 3,5- and 2,6-diisopropylphenyl, 2,4,6-triisopropylphenyl, 2-, 3- and 4-butylphenyl, 2,4-, 2,5-, 3,5- and 2,6-dibutylphenyl, 2,4,6-tributylphenyl, 2-, 3- and 4-isobutylphenyl, 2,4-, 2,5-, 3,5- and 2,6-diisobutylphenyl, 2,4,6-triisobutylphenyl, 2-, 3- and 4-*sec*-butylphenyl, 2,4-, 2,5-, 3,5- and 2,6-di-*sec*-butylphenyl and 2,4,6-tri-*sec*-butylphenyl, 2-, 3- and 4-*tert*-butylphenyl, 2,4-, 2,5-, 3,5- and 2,6-di-*tert*-butylphenyl, 2,4,6-tri-tertbutylphenyl; 2-, 3- and 4-methoxyphenyl, 2,4-, 2,5-, 3,5- and 2,6-dimethoxyphenyl, 2,4,6-trimethoxyphenyl, 2-, 3- and 4-ethoxyphenyl, 2,4-, 2,5-, 3,5- and 2,6-diethoxyphenyl, 2,4,6-triethoxyphenyl, 2-, 3- and 4-propoxyphenyl, 2,4-, 2,5-, 3,5- and 2,6-dipropoxyphenyl, 2-, 3- and 4-isopropoxyphenyl, 2,4-, 2,5-, 3,5- and 2,6-diisopropoxyphenyl and 2-, 3- and 4-butoxyphenyl; 2-, 3- and 4-chlorophenyl, and 2,4-, 2,5-, 3,5- and 2,6-dichlorophenyl; 2-, 3- and 4-hydroxyphenyl and 2,4-, 2,5-, 3,5- and 2,6-dihydroxyphenyl; 2-, 3- and 4-cyanophenyl; 3- and 4-carboxyphenyl; 3- and 4-carboxamidophenyl, 3- and 4-N-methylcarboxamidophenyl and 3- and 4-N-ethylcarboxamidophenyl, 3- and 4-acetylaminophenyl, 3- and 4-propionylaminophenyl and 3- and 4-butyrylaminophenyl; 3- and 4-N-phenylaminophenyl, 3- and 4-N-(o-tolyl)aminophenyl, 3- and 4-N-(m-tolyl)aminophenyl and 3- and 4-N-(p-tolyl)aminophenyl, 3- and 4-(2-pyridyl)aminophenyl, 3- and 4-(3-pyridyl)aminophenyl, 3- and 4-(4-pyridyl)aminophenyl, 3- and 4-(2-pyrimidyl)aminophenyl and 4-(4-pyrimidyl)aminophenyl; 4-phenylazophenyl, 4-(1-naphthylazo)phenyl, 4-(2-naphthylazo)phenyl, 4-(4-naphthylazo)phenyl, 4-(2-pyridylazo)phenyl, 4-(3-pyridylazo)phenyl, 4-(4-pyridylazo)phenyl, 4-(2-pyrimidylazo)phenyl, 4-(4-pyrimidylazo)phenyl and 4-(5-pyrimidylazo)phenyl; cyclopentyl, 2- and 3-methylcyclopentyl, 2- and 3-ethylcyclopentyl, cyclohexyl, 2-, 3- and 4-methylcyclohexyl, 2-, 3- and 4-ethylcyclohexyl, 3- and 4-propylcyclohexyl, 3- and 4-isopropylcyclohexyl, 3- and 4-butylcyclohexyl, 3- and 4-*sec-*butylcyclohexyl, 3- and 4-*tert*-butylcyclohexyl, cycloheptyl, 2-, 3- and 4-methylcycloheptyl, 2-, 3- and 4-ethylcycloheptyl, 3- and 4-propylcycloheptyl, 3- and 4-isopropylcycloheptyl, 3- and 4-butylcycloheptyl, 3- and 4-*sec*-butylcycloheptyl, 3- and 4-*tert*-butylcycloheptyl, cyclooctyl, 2-, 3-, 4- and 5-methylcyclooctyl, 2-, 3-, 4 and 5-ethylcyclooctyl, 3-, 4- and 5-propylcyclooctyl, 2-dioxanyl, 4-morpholinyl, 2- and 3-tetrahydrofuryl, 1-, 2- and 3-pyrrolidinyl and 1-, 2-, 3- and 4-piperidyl; phenylazide, 2-naphthylazide, 2-pyridylazd; alkynyl groups, eg, ethynyl, propynyl, butynyl, pentynyl, hexynyl, heptynyl, octynyl, nonynyl, decynyl.

Preferably, the residues R₁ to R₈ and Ar in the general formula (2) are the same or different and independently from each other a hydrogen atom, a C₁₋₂₀-alkyl group, a C₁₋₂₀-alkenyl group, a C₁₋₂₀-alkynyl group, a C₄₋₂₀-cycloalkyl group, a C₅₋₂₀-aromatic group, a C₄₋₂₀-cycloaliphatic group or a C₅₋₂₀-heterocyclic goup. One or more of two adjacent residues R may be in particular linked with each other to form a C₅₋₂₀-aromatic group, a C₄₋₂₀-cycloaliphatic group or a C₅₋₂₀-heterocyclic goup and preferably a C₅₋₇-aromatic group, a C₆₋₈₀-cycloaliphatic group or a C₅₋₇-heterocyclic goup.

Particularly preferably, in general formula (2) residue R₁ is hydrogen or a C₁₋₂₀-alkyl group, residues R₂ to R₈ are hydrogen and residue Ar is aryl, a C₆₋₁₅-alkyl group or a trialkylsilyl alkynyl group.

In any of the aforementioned embodiments, the residue Ar in the general formula (2) is preferably selected from the group consisting of phenyl, trifluorphenyl, 1,5-dimethylphenyl, mesityl, triisopropylsilyl ethynyl, trimethylsilyl ethynyl, phenylsilyl ethynyl and C₆₋₁₅-alkyl groups.

In accordance with another particularly preferred embodiment of the present invention, in the general formula (2) either: i) residue R₁ is a C₁₋₂₀-alkyl group and residues R₂ to R₈ are hydrogen, or ii) residues R₁ to R₈ are hydrogen or iii) residues R₁, R₂, R₄ to R₇ are hydrogen and residues R₃ and R₈ are the same or different and mesityl or triisopropylsilyl ethynyl, wherein Ar is as described above.

Most preferably, the compound to be used in accordance with the present invention has one of the below formulae: 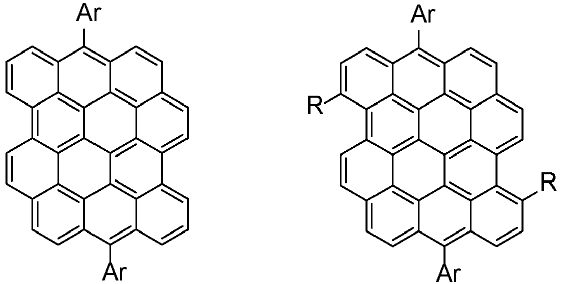 wherein: 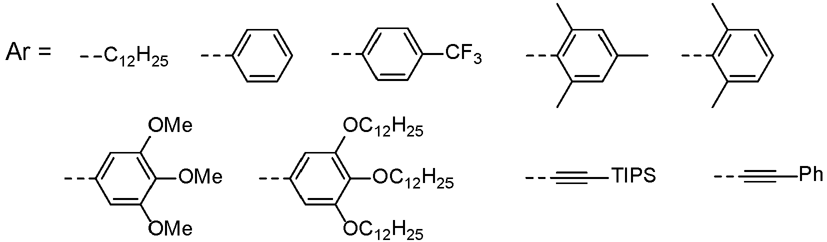 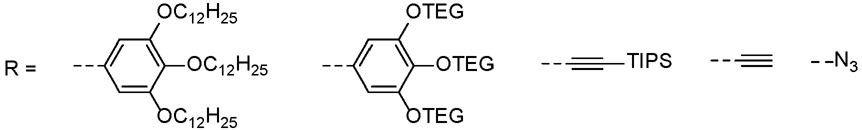 with Ph=phenyl, Me=methyl and TIPS=triisopropylsilyl. Particularly suitable examples therefore are:

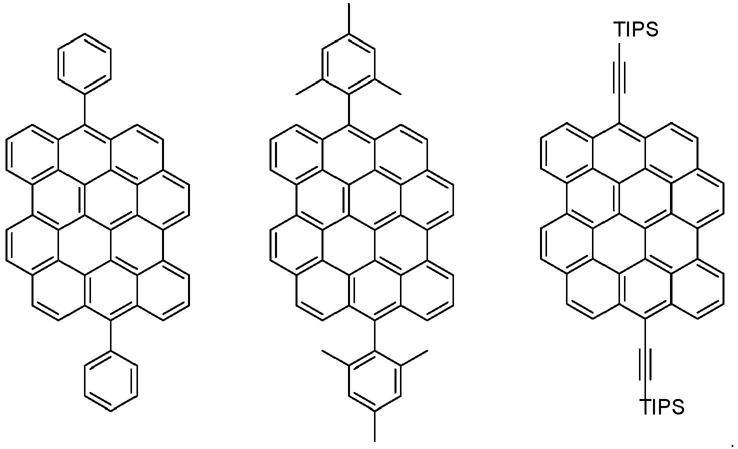

In accordance with an alternative embodiment, in the general formula (2) one or both of the residues R₃ and R₄ are linked with each other to form an aromatic, heteroaromatic, cyclic or heterocyclic group. Preferably, one or both of the residues R₃ and R₄ are linked with each other in this embodiment to form a heterocyclic group, such as in particular a heterocyclic imide group, more preferably a C₁₋₁₂-N-alkyl imide group and most preferably a N-hexyl imide group.

Likewise to this, in the general formula (2) one or both of the residues R₃ and R₄ may be linked with each other to form a fumaric acid imide group, preferably a C₁₋₁₂-N-alkyl fumaric acid imide group and more preferably a N-hexyl fumaric acid imide group. In this embodiment it is preferred that residue R₁ is hydrogen or a C₁₋₂₀-alkyl group, residues R₂ to R₈ are hydrogen and residue Ar is aryl or a trialkylsilyl alkynyl group.

Examples for compound in accordance with this embodiment are:

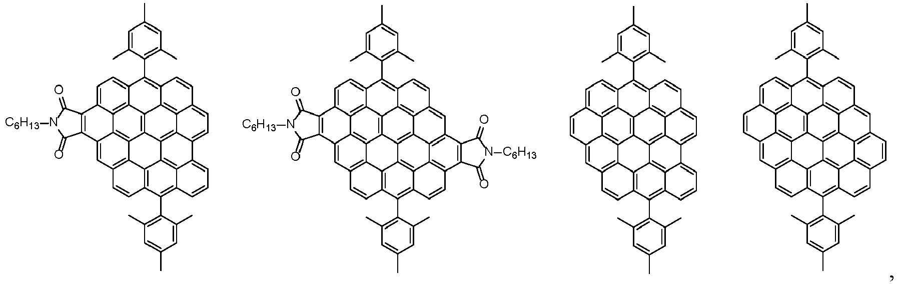

In accordance with a further particularly preferred embodiment of the present invention, the compound having the general formula (1) or the general formula (2) has a solubility in water at 23°C of at least 0.01 g/l, preferably of at least 0.05 g/l and more preferably of at least 0.1 g/l. These compounds are biocompatible and therefore excellently suitable for being used in SMLM and STED bio-imaging experiments, such as when the sample for the microscopy is a bioogical system, such as a cell.

In accordance with the present invention, the solubility and particularly the solubility of the compound having the general formula (1) or the general formula (2) in water at 23°C is measured as follows: 1 mg sample is weighed into an Erlenmeyer flask and is then mixed homogeneously with 4 ml of water with a spatula at 23°C. The remaining substance on the spatula is stripped off with a magnetic stirrer bar, which is then added to the Erlenmeyer flask. While stirring with a magnetic stirrer, water is added dropwise with a burette until the solution in the Erlenmeyer flask becomes clear at 23°C. After that, the solubility of compound in water is calculated by calculating the ratio of weighed compound divided by the volume of added water and then by recalculating this ratio to 1 I of water.

Preferably, in this embodiment in the general formula (1) at least one of residues R or in the general formula (2) at least one of residues R₁ to R₈ and Ar is a hydrophilic group selected from the group consisting of groups comprising one or more carboxy groups, groups including one or more polyethylene residues with each 2 to 20 alkylene moieties and preferably 2 to 20 ethylene moieties, one or more sulfonate groups, one or more quaternary amine groups, one or more amide groups, one or more imine groups and one or more pyridine groups.

It is further preferred that in this embodiment in the general formula (1) at least one of residues R or in the general formula (2) at least one of residues R₁ to R₈ and Ar is a hydrophilic group according to one of the below formulae:

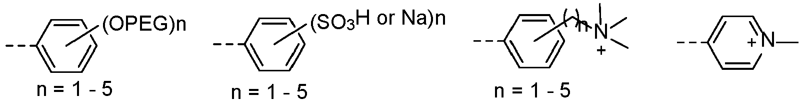

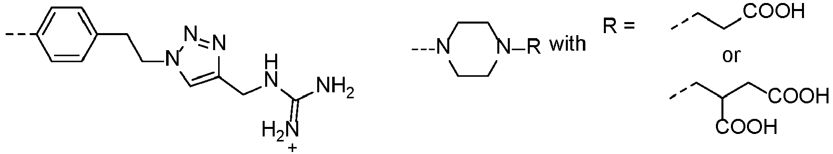

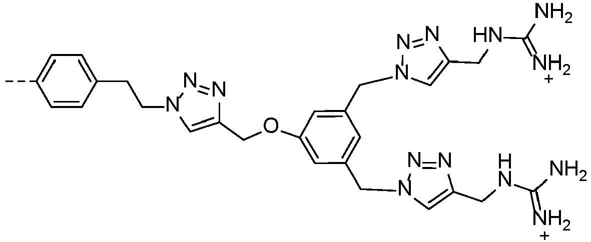

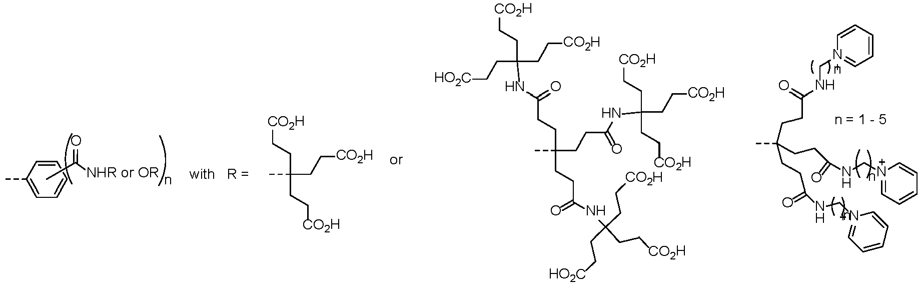

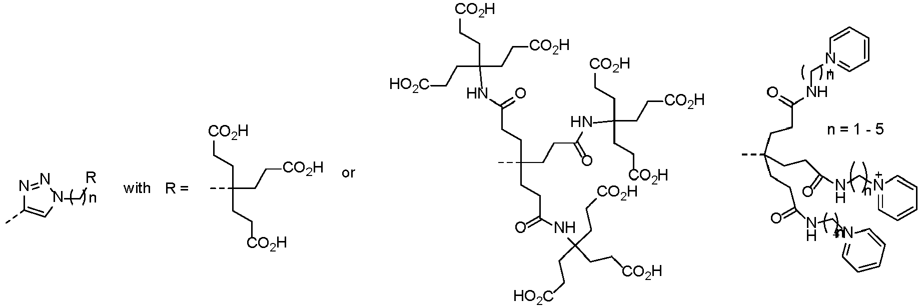

In a further development of the idea of the present invention, it is further preferred in this embodiment that in general formula (2) at least one of residues R₁ to R₈ and Ar is a group including one to five, preferably two to four and more preferably three polyethylene residues. Preferably, each of the polyethylene residues comprises 2 to 20, more preferably 2 to 8 and still more preferably 3 to 5, such as in particular 4 ethylene moieties. At least one of residues R in the general formula (1) or at least one residues R₁ to R₈ and Ar in the general formula (2) of this variant is preferably a phenyl group, which is substituted with one to five, preferably two to four and more preferably three polyethylene residues with each 2 to 20, preferably 2 to 8 and more preferably 3 to 5, such as in particular 4 ethylene moieties.

A particular good water solubility is obtained, when each of residues R₃, R₈ and Ar in the general formula (2) is a hydrophilic group, or when each of residues R₃ and R₈ is a hydrophilic group and residue Ar is selected from the group consisting of phenyl, mesitylene, triisopropylsilyl ethynyl and trimethylsilyl ethynyl. All of the hydrophilic groups of the compound may be the same or may be different. Residues R₁, R₂ and R₄ to R₇ are in this variant of the present invention preferably hydrogen.

In a further development of the idea of the present invention it is proposed that at least one of residues R in the general formula (1) and at least one of the residues R₁ to R₈ and Ar and preferably exactly one of the residues R₁ to R₈ and Ar of the general formula (2) is a group, which easily reacts with a respective coupling group at the target molecule. For instance, any of one or more of the residues R in the general formula (1) and any of one or more of the residues R₁ to R₈ and Ar of the general formula (2) is a group with a terminal alkyne group. Such groups can be easily reacted for instance with an azide group of the target molecule, wherein the alkyne group and the azide group react under formation of a triazole group, which connects the fluorophore to the target molecule. Preferably, one of the residues R₁ to R₈ and Ar of the compound having the general formula (2) is an ethyne group.

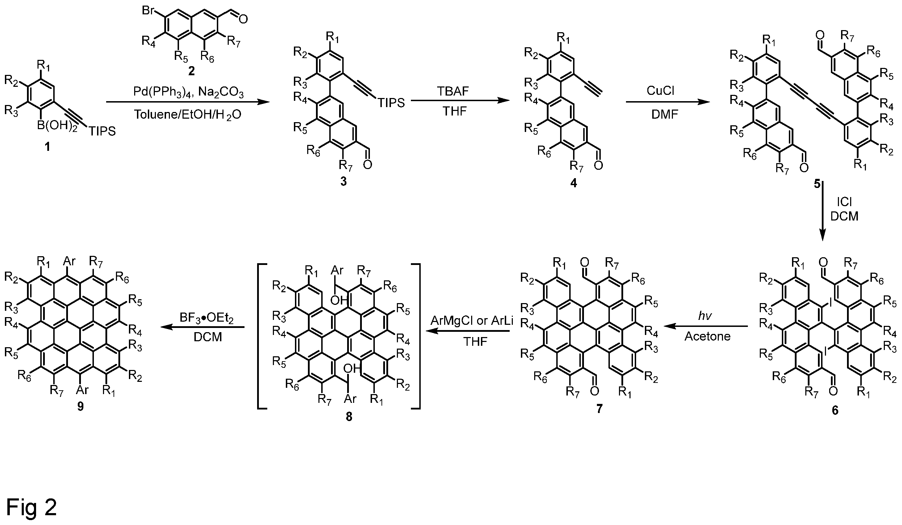

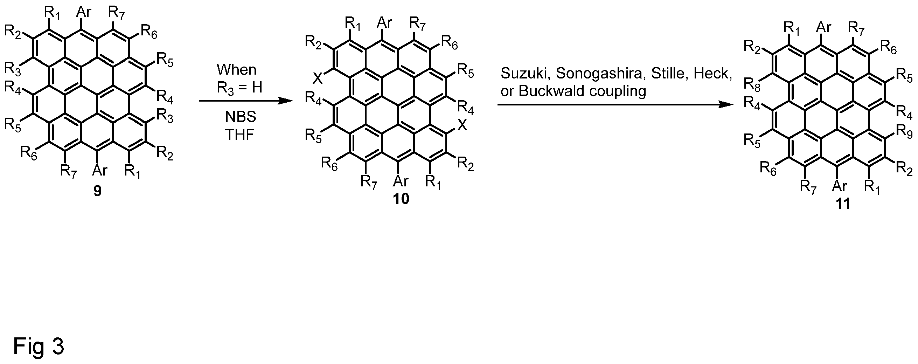

The DBOV compounds having the general formula (2) can be synthesized according to the reaction schemes shown in Figures 2 and 3 and as described below in the examples.

In more general terms, it is preferred that the compound to be used in accordance with the present invention comprises a unit with the general formula (3) or the compound has the general formula (3): 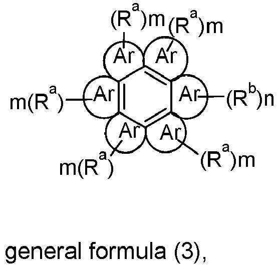 wherein in general formula (3) the residues R^{a} and R^{b} are the same or different and independently from each other a hydrogen atom, an unsubstituted C₁₋₂₀ hydrocarbon residue, a substituted C₁₋₂₀ hydrocarbon residue, a halogen, an azide group, a hydroxy group, a nitro group, an amino group, a formyl group, a cyano group or one or more of two adjacent residues R^{a} and R^{b} are linked with each other to form an aromatic group, a cycloaliphatic group or a heterocyclic goup, each of residues Ar is an aromatic group, a cycloaliphatic group or a heterocyclic goup, and m is an integer of 1 to 4. Any of the unsubstituted and/or substituted C₁₋₂₀ hydrocarbon residues may be in particular a C₁₋₂₀-alkyl group, a C₁₋₂₀-alkenyl group, a C₁₋₂₀-alkynyl group, C₁₋₂₀-alkoxy group, a C₄₋₂₀-cycloalkyl group, a C₅₋₂₀-aromatic group, a C₄₋₂₀-cycloaliphatic group or a C₅₋₂₀-heterocyclic goup. One or more of two adjacent residues R may be in particular linked with each other to form a C₅₋₂₀-aromatic group, a C₄₋₂₀-cycloaliphatic group or a C₅₋₂₀-heterocyclic goup and preferably a C₅₋₇-aromatic group, a C₆₋₈₀-cycloaliphatic group or a C₅₋₇-heterocyclic goup.

In the forementioned embodiment, at least one of the residues Ar in the general formula (3) may be a heterocyclic group and each of the remaining residues Ar may be independently from each other a benzene group, a cycloaliphatic group or a heterocyclic goup.

More preferably, the residues R^{a} and R^{b} in the general formula (3) are the same or different and independently from each other a hydrogen atom, an unsubstituted C₁₋₂₀-hydrocarbon residue or one or more of two adjacent residues R are linked with each other to form an aromatic group or a heterocyclic goup.

Suitable examples for the use of this embodiment of the present invention are compounds falling under the general formula (3), which have any of the below general formulae (4) and (5): 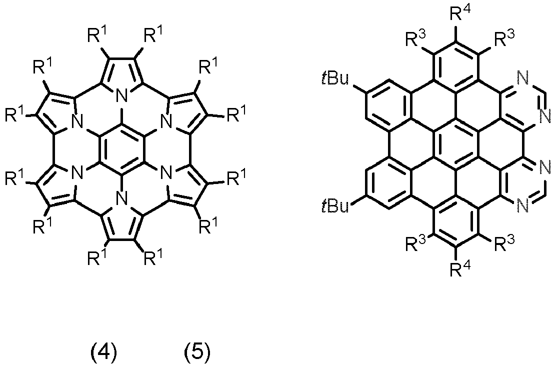 wherein in the general formulae (4) and (5) the residues R¹ to R⁴ are the same or different and independently from each other a hydrogen atom, an unsubstituted C₁₋₂₀-hydrocarbon residue, a substituted C₁₋₂₀ hydrocarbon residue, a halogen, an azide group, a hydroxy group, a nitro group, an amino group, a formyl group, a cyano group or one or more of two adjacent residues R¹ to R⁴ are linked with each other to form an aromatic group, a cycloaliphatic group or a heterocyclic goup, and each of residues Ar is a cyclic group, wherein at least one of the residues Ar is a heterocyclic group and each of the remaining residues Ar is independently from each other a benzene group, a cycloaliphatic group or a heterocyclic goup. Any of the unsubstituted and/or substituted C₁₋₂₀ hydrocarbon residues may be in particular a C₁₋₂₀-alkyl group, a C₁₋₂₀-alkenyl group, a C₁₋₂₀-alkynyl group, a C₁₋₂₀-alkoxy group, a C₄₋₂₀-cycloalkyl group, a C₅₋₂₀-aromatic group, a C₄₋₂₀-cycloaliphatic group or a C₅₋₂₀-heterocyclic goup. One or more of two adjacent residues R may be in particular linked with each other to form a C₅₋₂₀-aromatic group, a C₄₋₂₀-cycloaliphatic group or a C₅₋₂₀-heterocyclic goup and preferably a C₅₋₇-aromatic group, a C₆₋₈₀-cycloaliphatic group or a C₅₋₇-heterocyclic goup.

Other suitable examples for compounds to be used in accordance with the present invention are compounds, which comprise a unit with any of the below formulae or which have any of the below formulae:

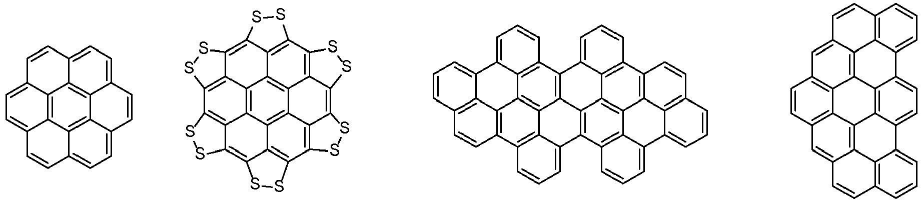

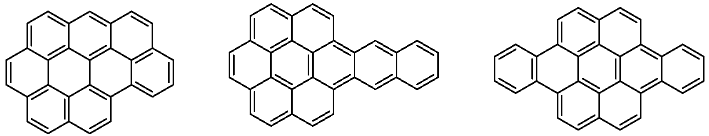

Any of the hydrogen atoms of the above shown formulae may be substituted with any of the aforementioned substituents.

Further suitable examples for the compound to be used in the present invention are the below general formulae (6) to (22): 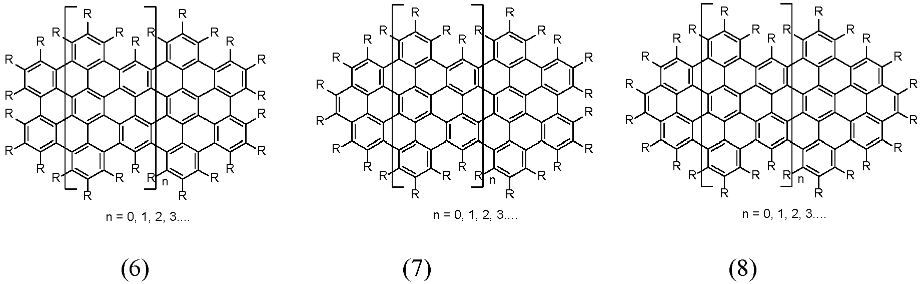 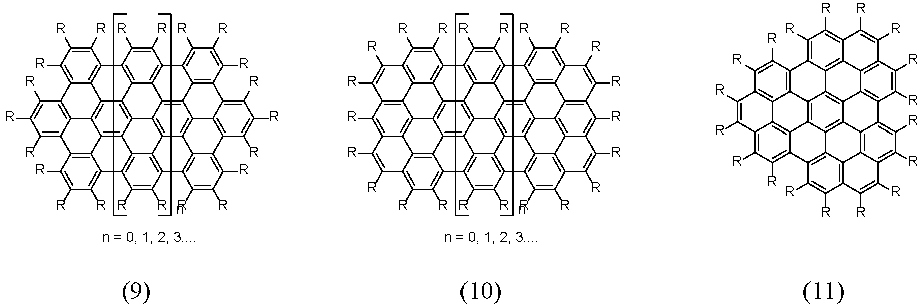 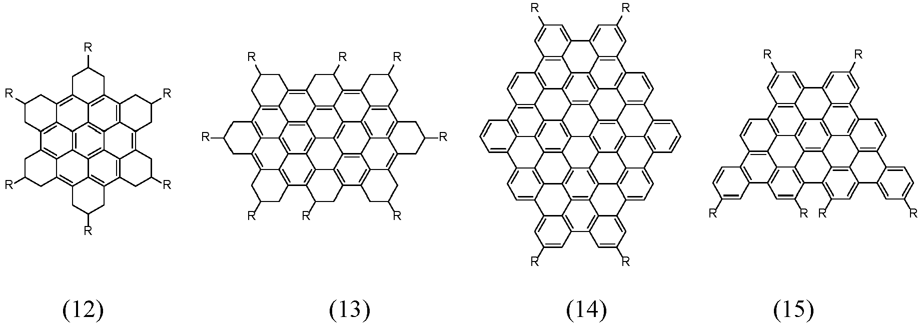 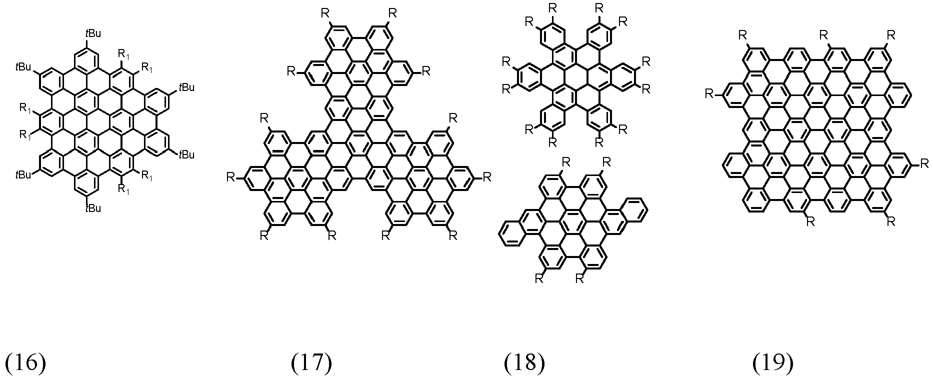 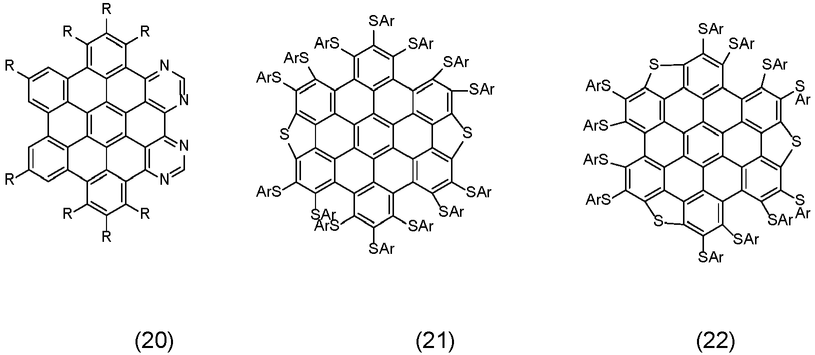 wherein in each of the general the formulae (6) to (22) the residues R, R', R₁ and Ar are the same or different and independently from each other a hydrogen atom, a C₁₋₂₀ alkyl group or a halogen, and wherein n is an integer between 1 and 10.

Further specific examples for suitable are those having any of the below formulae:

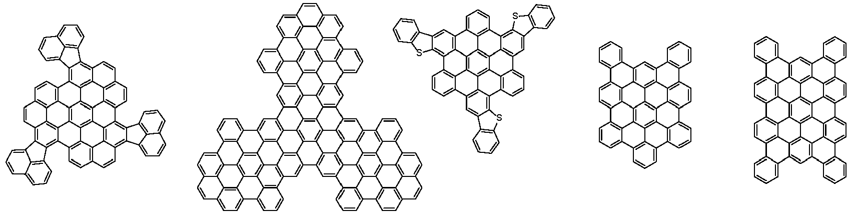

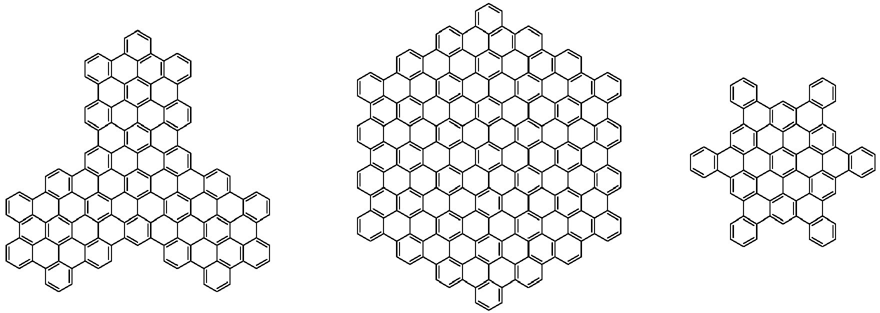

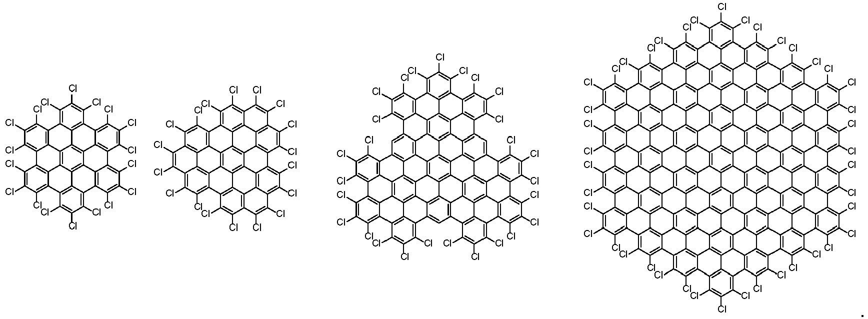

Preferred compounds are:

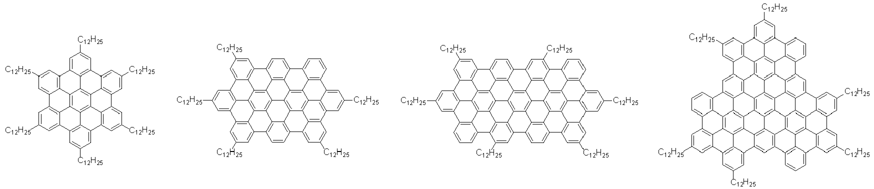

In accordance with still an alternative embodiment, the compound to be used in the present invention comprises a unit with the general formula (23) or the compound has the general formula (23): 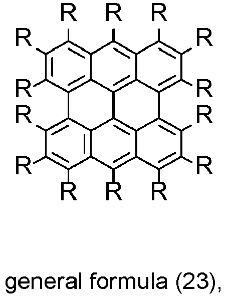 wherein in general formula (23) the residues R are the same or different and independently from each other a hydrogen atom, an unsubstituted C₁₋₂₀ hydrocarbon residue, a substituted C₁₋₂₀ hydrocarbon residue, a halogen, an azide group, a hydroxy group, a nitro group, an amino group, a formyl group, a cyano group or one or more of two adjacent residues R are linked with each other to form an aromatic group, a cycloaliphatic group or a heterocyclic goup. Any of the unsubstituted and/or substituted C₁₋₂₀ hydrocarbon residues may be in particular a C₁₋₂₀-alkyl group, a C₁₋₂₀-alkenyl group, a C₁₋₂₀-alkynyl group, a C₁₋₂₀-alkoxy group, a C₄₋₂₀-cycloalkyl group, a C₅₋₂₀-aromatic group, a C₄₋₂₀-cycloaliphatic group or a C₅₋₂₀-heterocyclic goup. One or more of two adjacent residues R may be in particular linked with each other to form a C₅₋₂₀-aromatic group, a C₄₋₂₀-cycloaliphatic group or a C₅₋₂₀-heterocyclic goup and preferably a C₅₋₇-aromatic group, a C₆₋₈₀-cycloaliphatic group or a C₅₋₇-heterocyclic goup.

Preferably, each of residues R in the general formula (23) is a hydrogen atom and/or one or more of two adjacent residues R are linked with each other to form an aromatic group.

Specific examples for suitable compounds according to the general formula (23) are those having any of the below formulae:

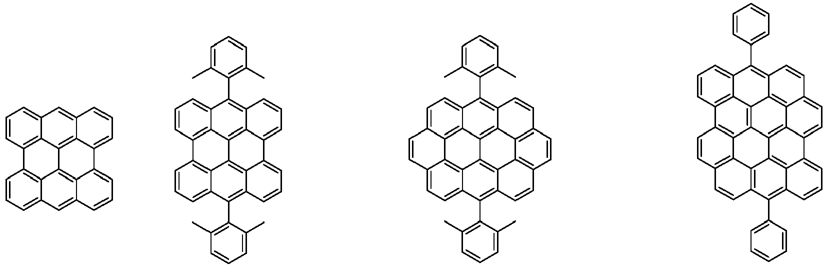

In accordance with still an alternative embodiment, the compound to be used in the present invention comprises a unit with the general formula (24) or the compound has the general formula (24): 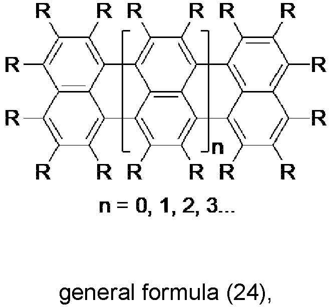 wherein in general formula (24) the residues R are the same or different and independently from each other a hydrogen atom, an unsubstituted C₁₋₂₀ hydrocarbon residue, a substituted C₁₋₂₀ hydrocarbon residue, a halogen, an azide group, a hydroxy group, a nitro group, an amino group, a formyl group, a cyano group or one or more of two adjacent residues R are linked with each other to form an aromatic group, a cycloaliphatic group or a heterocyclic goup, and wherein n is an integer of 0, 1 or 2. Any of the unsubstituted and/or substituted C₁₋₂₀ hydrocarbon residues may be in particular a C₁₋₂₀-alkyl group, a C₁₋₂₀-alkenyl group, a C₁₋₂₀-alkynyl group, a C₁₋₂₀-alkoxy group, a C₄₋₂₀-cycloalkyl group, a C₅₋₂₀-aromatic group, a C₄₋₂₀-cycloaliphatic group or a C₅₋₂₀-heterocyclic goup. One or more of two adjacent residues R may be in particular linked with each other to form a C₅₋₂₀-aromatic group, a C₄₋₂₀-cycloaliphatic group or a C₅₋₂₀-heterocyclic goup and preferably a C₅₋₇-aromatic group, a C₆₋₈₀-cycloaliphatic group or a C₅₋₇-heterocyclic goup.

Specific examples for suitable compounds according to the general formula (24) are those having any of the below general formulae (25) and (26): 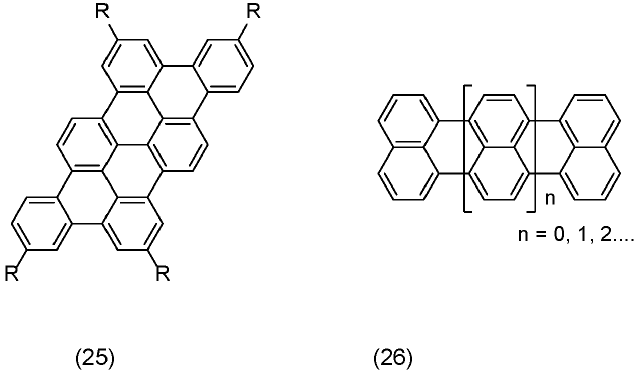 with R being as defined above.

In a further development of the idea of the present invention, it is suggested that the compound to be used comprises at least one heterocyclic ring group.

In accordance with a further particular embodiment of the present invention it is proposed that - as described above for the compounds having the general formula (2) - the compound to be used comprises at least one residue and preferably exactly one residue, which easily reacts with a respective coupling group at the target molecule. For instance, the compound to be used may have a residue with a terminal alkyne group. Such groups can be easily reacted for instance with an azide group of the target molecule, wherein the alkyne group and the azide group react under formation of a triazole group, which connects the fluorophore to the target molecule. Preferably, the compound to be used has one residue with a one terminal ethyne group.

A preferred nanographene fluorophore molecule is from the group of pyrene-based polycyclic aromatic hydrocarbon, and their π-extended structures and heteroanalogs. Preferred pyrene-based polycyclic aromatic hydrocarbons includes pyrene (shown below on the left) and benzo[rst]pentaphene (BPP, shown below on the right).

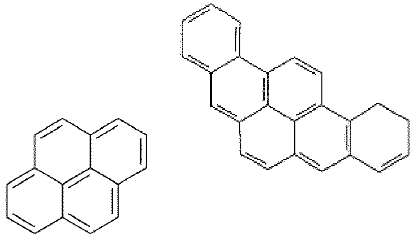

A preferred nanographene fluorophore molecule from the group comprising rylene and its π-extended structures and heteroanalogs. Preferred rylenes include perylene (below on the left) and terylene (below on the right):

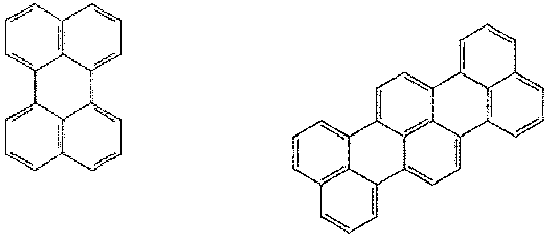

Preferred rylenes also include molecules according to the general formula below, in particular perylenediimide (PDI, n = 0 in the general formula) and terylenediimide (TDI, n = 1 in the general formula):

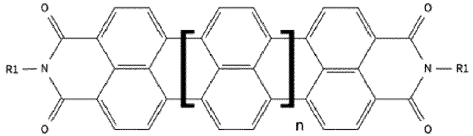

They preferably are functionalized at one or more of the nitrogen atoms. Shown below are examples of functionalized TDI (on the left) and functionalized PDI (on the right):

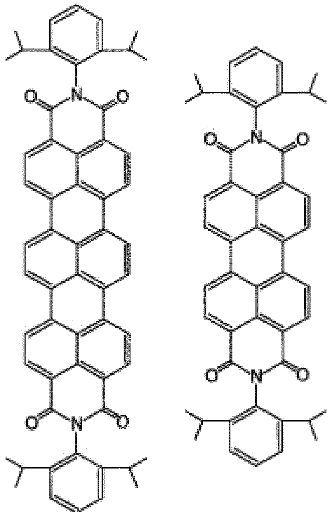

A preferred nanographene fluorophore molecule is from the group comprising acenes and their π-extended structures and heteroanalogs. The general formula of acenes is shown below.

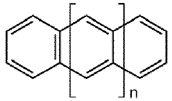

Preferred acenes includes, for example, pentacene, benzotetracenes, rubicene and hexacene shown below in this order:

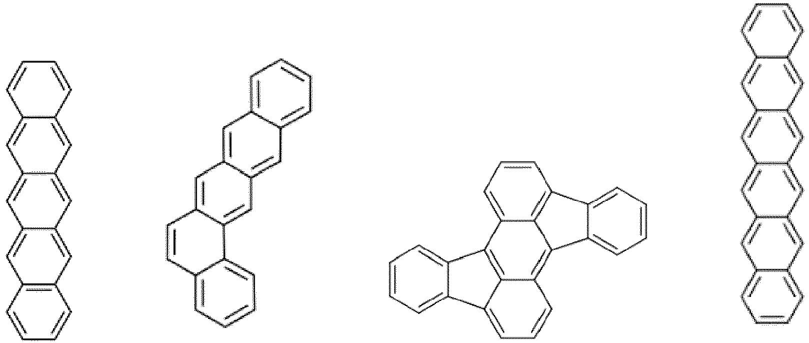

A preferred nanographene fluorophore molecule is from the group comprising phenacenes, and their π-extended structures and heteroanalogs. A preferred phenacene, 7-phenacene, is shown below:

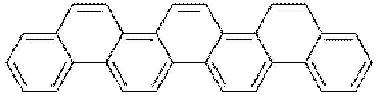

A preferred nanographene fluorophore molecule is from the group comprising acenoacenes, also referred to as acene-fused acenes., and their π-extended structures and heteroanalogs. Preferred acenoacenes include, for example, tetracenotetracene as disclosed by Broman et al in "Tetraceno[2,1,12,11-opqra]tetracene-extended tetrathiafulvalene - redox-controlled generation of a large PAH core",Org Biomol Chem, 2017,15, 807-811, which definition is incorporated into the present disclosure by reference, as well as anthanthrene shown below:

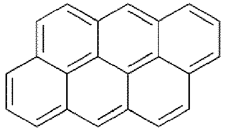

Preferred acenoacenes also include peri-acenoacenes and peri-acenes as defined in Gu et al, "peri-acenoacenes", Chem. Commun., 2019,55, 5567-5570, which definitions are incorporated into the present disclosure by reference. Preferred peri-acenes include bisanthene and peritetracene. With regard to the synthesis of these molecules reference is made to the before-mentioned publication as well as to Katsuta et al in "Synthesis of pentacene-, tetracene- and anthracene bisimides usingdouble-cyclization reaction mediated by bismuth(III) triflate", Chem Commun, 2011, 47, 10112-10114, and Broman et al in "Tetraceno[2,1,12,11-opqra]tetracene-extended tetrathiafulvalene - redox-controlled generation of a large PAH core", : Org Biomol Chem, 2017, 15, 807. The teaching of these publications with regard to synthesis is incorporated into the present disclosure by reference.

A preferred nanographene fluorophore molecule is from the group comprising coronene and its π-extended structures and heteroanalogs. Preferred members of this group are coronene (shown below on the right) and hexabenzocoronene (HBC, shown below on the right):

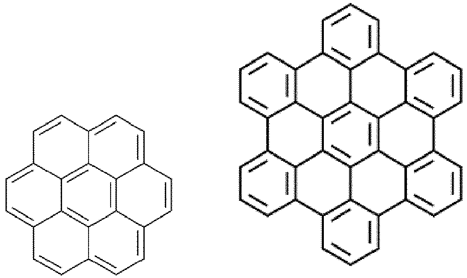

A preferred nanographene fluorophore molecule is from the group comprising ovalene and its π-extended structures and heteroanalogs. Preferred members of this group are ovalene (shown below on the right) and dibenzo[hi,st]ovalene (DBOV, shown below on the right):

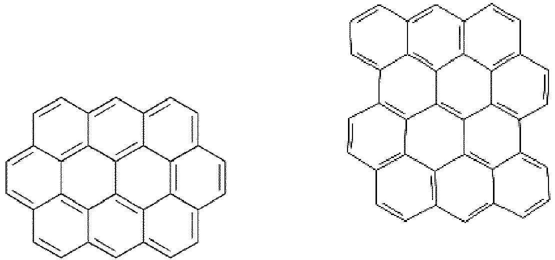

A particularly preferred nanographene fluorophore is dibenzo[hi,st]ovalene with two mesityl (Mes) groups (DBOV-Mes), DDBP-Mes (structure synthesis disclosed by Xu et al in "Synthesis and Characterizations of 5,5'-Bibenzo[rst]pentaphene with Axial Chirality and Symmetry-Breaking Charge Transfer"; Advanced Science, Volume 9, Special Issue 19, July 6, 2022, 2200004), DBDNC (structure synthesis disclosed by Xu et al in "Synthesis of zigzag- and fjord-edged nanographene with dual amplified spontaneous emission", Chem Sci, 2022,13, 13040-13045), TBDNP (structure synthesis disclosed by Xu et al in "Chiral Nanographene-Based Near-Infrared Fluorophore with Self-Blinking Properties", Advances Functional Materials, Volume 34, Issue 11 March 11, 2024, 2308110) andFZ1 (structure synthesis disclosed by Gu et al in "Graphene-like Molecules with Four Zigzag Edges", Angewandte Chemie, Volume130, Issue 22, May 28, 2018, Pages 6651-6655). DBOV-Mes is shown below:

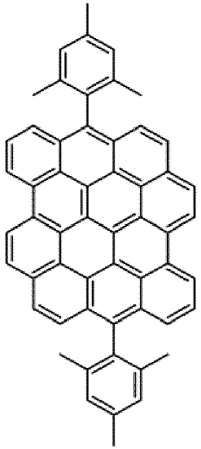

The preferred nanographene molecule is a molecule is at least 80 % recoverable, preverably more than 90 % recoverable, more at least 95 % recoverable, more preferably at least 98 % recoverable. In this context, a recoverability percentage indicates that it is achievable that by supplying electromagnetic radiation to a sample of the nanographene molecules in their non-flurescence-excitable state the indicated percentage of molecules can be returned to their flurescence-excitable state.

The preferred non-fluorescence-excitable state of the nanographene molecule has a half-life of at least 10¹ times, more preferably at least 10² times, more preferably at least 10³ times that of the half live of the excited state. The preferred non-fluorescence-excitable state has a half-life of at least 1 second, more preferably at least 10 seconds, more preferably at least 1 minute, more preferably at least 1 hour. The induced recovery of the fluorescence-excitable state according to the present invention is particularly useful with a long-lived non-fluorescence-excitable state.

The preferred fluorescence material is a bead, liposome or a nanoparticle comprising the fluorophore. Preferably, the nanographene is used as a fluorophore of a fluorescent bead, liposome or nanoparticle. The preferred bead is manufactured by a method that involves the copolymerization of styrene and divinylbenzene. The preferred liposome is manufactured by a method that involves the

### Brief description of the drawings

In the following, further preferred embodiments of invention are illustrated by means of examples. The invention is not limited to these examples, however.

The drawings schematically show:
- Figure 1: is an overview of a synthesis route for DBOV-Mes;
- Figure 2: is an overview of a synthesis route for symmetric dibenzo[hi,st]ovalenes;
- Figure 3: is an overview of a route for converting a symmetric dibenzo[hi,st]ovalene into an asymmetric dibenzo[hi,st]ovalene;
- Figure 4: shows a sample of DBOV-Mes molecules imaged by fluorescence microscopy before and after irradiation with laser light of a 775 nm wavelength;
- Figure 5: shows fluorescence microscopy images of DBOV-Mes before and after photo-quenching after subsequent recovery of the fluorescence;
- Figure 6: is a schematic drawing of the proposed mechanism of photo-quenching and recovery in nanographene;
- Figure 7: is an Inln-In plot of the fluorescence ratio of DBOV-Mes as a function of the power density of the excitation laser light;
- Figure 8: is an Inln-In plot of the fluorescence reactivation rate of DBOV-Mes as a function of the intensity of the recovery light;
- Figure 9: shows the fluorescence retention ratio of DBVO-Mes as a function of the power density of the recovery light;
- Figure 10: shows photo-quenching and recovery rates of DBOV-Mes in three different environments; and

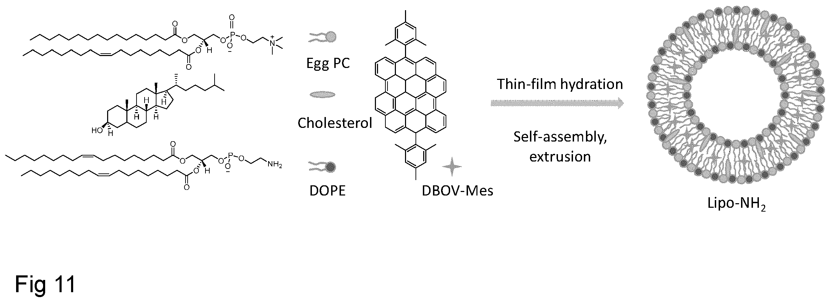

- Figure 11: is an overview of the preparation of DBOV-Mes liposomes.

### Detailed description of an embodiment of the invention

In the following description of preferred embodiments of the invention, identical reference numerals refer to identical or similar components.

### Example 1: Synthesis of DBOV-Mes

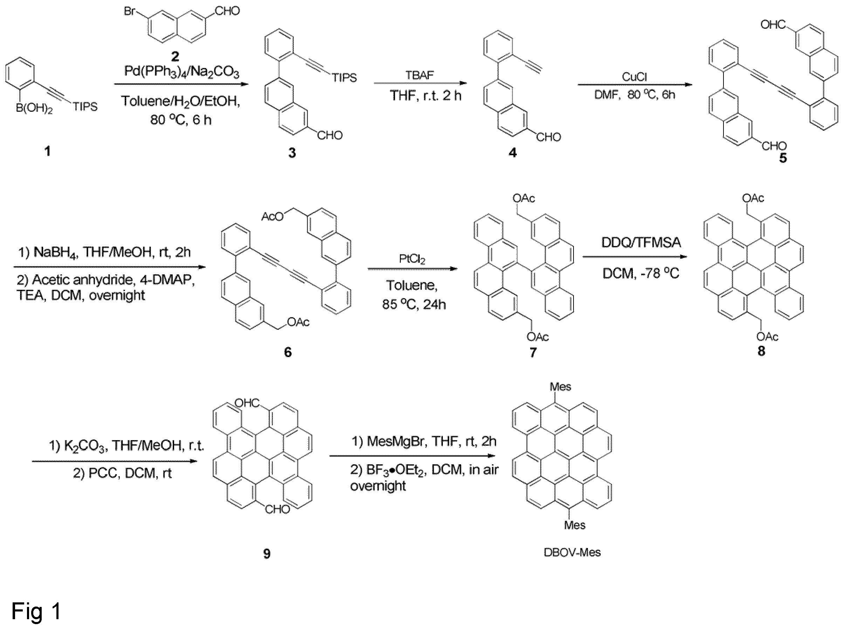

Dibenzo[hi,st]ovalene with two mesityl (Mes) groups (DBOV-Mes) was synthesized following the protocol described in the Supplementary Information of Coles et al, "Strong Exciton-Photon Coupling in a Nanographene Filled Microcavity", Nano Letters, 17, 5521-5525 (2017) which synthesis protocol is herewith incorporated into the present application by reference. The Supplementary Information with the synthesis protocol is available at the URL http://pubs.acs.org/doi/suppl/10.1021/acs.nanolett.7b02211/suppl_file/nl7b02211_si_001.pdf. An overview of the synthesis route is shown in **Figure 1****,** which is taken from the above-mentioned Supplementary Information.

### Example 2: Synthesis of 6, 14-didodecyldibenzo[hi,st]ovalene

### Synthesis of 6,6'-diiodo-[5,5'-bichrysene]-3,3'-dicarbaldehyde

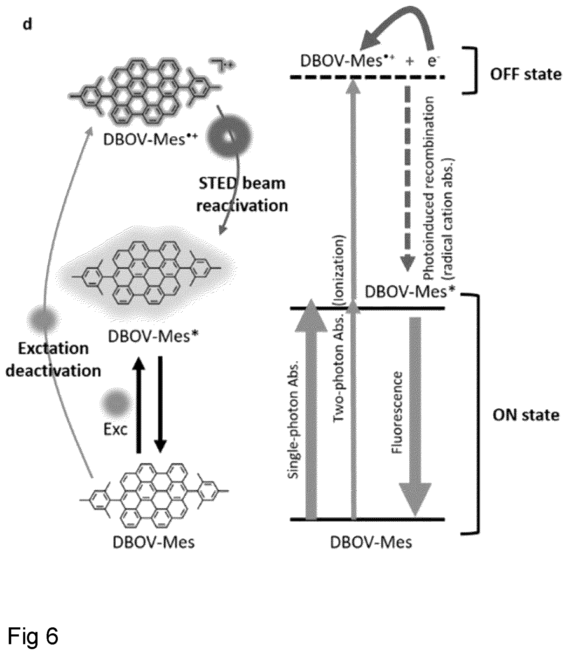

In accordance with the reaction scheme shown in **Figure 2****,** 6,6'-diiodo-[5,5'-bichrysene]-3,3'-dicarbaldehyde, which is compound 6 with all residues R₁ to R₇ being hydrogen atoms, was prepared starting from compound 1, in which all residues R₁ to R₃ are hydrogen atoms. Compound 1 was prepared as described in Nano Letters, 2017, volume 17, pages 5521 to 5525. Then, to a solution of compound 1 (2.0 g, 3.9 mmol) dissolved in anhydrous dichloromethane (240 mL) ICI (8.58 mmol, 8.58 mL, 1 M in dichloromethane) was added. After stirring at room temperature for 2 hours, the excess ICI was quenched by addition of saturated aqueous Na₂S₂O₃ solution (50 mL). The organic phase was separated, washed with brine (50 mL), dried over Na₂SO₄ and evaporated. The residual solid was recrystallized with dichloromethane and methanol.

After filtration, the product (2.2 g, 76%) was obtained as white solid. The product had the following characteristics:
Mp: >400 °C; ¹H NMR (300 MHz, Methylene Chloride-*d*₂) δ 9.18 (d, *J* = 9.2 Hz, 2H), 9.00 (d, *J* = 8.5 Hz, 2H), 8.72 (s, 2H), 8.53 - 8.42 (m, 4H), 8.28 (d, *J* = 9.1 Hz, 2H), 8.04 (d, *J* = 8.3 Hz, 2H), 7.98 - 7.88 (m, 2H), 7.86 - 7.74 (m, 4H); ¹³C NMR (75 MHz, Methylene chloride-*d*₂) *δ* 191.8, 150.1, 137.4, 135.3, 134.6, 134.5, 133.7, 132.1, 130.9, 130.5, 130.4, 130.2, 129.7, 129.5, 129.3, 125.7, 124.4, 123.7, 114.1; FD-MS (8 kV): m/z 762.2; HRMS (MALDI-TOF): *m*/*z* Calcd for C₃₈H₂₀I₂O₂: 761.9553 [M]⁺, found: 761.9553 (error = 0 ppm).

Thus, it was shown that the product had the formula:

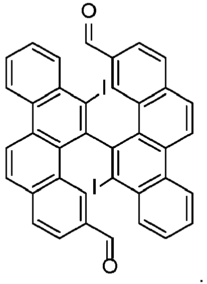

### Synthesis of 5,14-diformylbenzo[a]dinaphtho[2,1,8-cde:1',2',3',4'-ghi]perylene

In accordance with the reaction scheme shown in **Figure 2****,** 5, 14-diformylbenzo[a]dinaphtho[2,1,8-cde:1',2',3',4'-ghi]perylene, which is compound 7 with all residues R₁ to R₇ being hydrogen atoms, was prepared starting from compound 6 prepared as described above. More specifically, to a 3 L cylindrical quartz reactor containing 6,6'-diiodo-[5,5'-bichrysene]-3,3'-dicarbaldehyde (300 mg, 0.394 mmol) was added a mixture of acetone (600 mL) and triethylamine (6 mL). Then the mixture was degassed by bubbling with Ar for 20 minutes. After that, the reaction mixture was stirred and irradiated at room temperature in a photoreactor equipped with six 300 nm wavelength UV lamps with strong stirring for 2 hours.

After cooling down to room temperature, the solvent was evaporated and the residue was purified by column chromatography (*n*-hexane:ethyl acetate = 4:1) to give the product (170 mg, 86% yield) as red solid. The product had the following characteristics, which was further confirmed by X-ray single crystal structure analysis. Mp: >400 °C; ¹H NMR (300 MHz, 1,1,2,2-tetrachloroethane-*d*₂) *δ* 9.46 (s, 2H), 9.01 (d, *J* = 9.1 Hz, 2H), 8.90 (d, *J* = 8.4 Hz, 2H), 8.52 - 8.42 (m, 4H), 8.34 (t, *J* = 9.1 Hz, 4H), 7.83 - 7.72 (m, 2H), 7.64 (dd, *J* = 8.1, 1.1 Hz, 2H); ¹³C NMR (75 MHz, C₂D₂Cl₄) *δ* 190.8, 133.7, 131.7, 131.6, 130.6, 128.5, 128.2, 127.9, 127.5, 127.1, 127.1, 125.9, 124.9, 124.4, 124.0, 123.9, 123.2, 121.2, 120.6; FD-MS (8 kV): m/z 506.9; HR MS (MALDI-TOF): *m*/*z* Calcd for C₃₈H₁₈O₂: 506.1307 [M]⁺, found: 506.1288 (error = -3.7 ppm).

Thus, it was shown that the product had the formula:

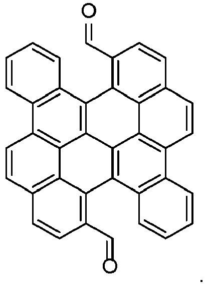

### Synthesis of 6,14-didodecyldibenzo[hi,st]ovalene

In accordance with the reaction scheme shown in **Figure 2****,** 4, 12-didodecyldibenzo[hi,st]ovalene, which is compound **9** with all residues R₁ to R₇ being hydrogen atoms and with residues Ar being n-dodecyl, was prepared starting from compound **7** prepared as described above. More specifically, to a 50 mL round bottom flask was added 5,14-diformylbenzo[*a*]dinaphtho[2,1,8-*cde*:1',2',3',4'-*ghi*]perylene (10.1 mg, 0.0199 mmol), the flask was evacuated and backfilled with Ar for 3 times before dry tetrahydrofuran (10 mL) was added. To the mixture was injected a solution of *n*-C₁₂H₂₅MgBr (0.30 mmol, 0.30 mL, 1 N) in ether. After stirring at room temperature for 5 hours, the reaction was quenched by addition of saturated NH₄Cl solution (10 mL). The organic phase was extracted with ethyl acetate (15 mL) for three times, washed with brine (30 mL) dried over Na₂SO₄ and evaporated. After drying under vacuum for 2 hours, the residue was dissolved in dry dichloromethane (10 mL) and degassed by bubbling with dichloromethane saturated Ar flow for 10 minutes. BF₃•OEt₂ (0.1 mL) was added and the mixture was stirred overnight at room temperature. After quenching with methanol (1 mL), *p*-chloranil (10 mg, 0.041 mmol) was added and stirred for 2 hours.

The crude product was precipitated by addition of methanol (30 mL), which was further purified by column chromatography (n-hexane:tetrahydrofuran = 4:1 to 0:1) to give the product (6.5 mg, 41% yield) as blue solid. The product had the following characteristics:
Mp: >400 °C. HRMS (MALDI-TOF): m/z Calcd for C₆₂H₆₄: 808.5008 [M]⁺, found: 808.4978 (error = -3.7 ppm).

Thus, it was shown that the product had the formula:

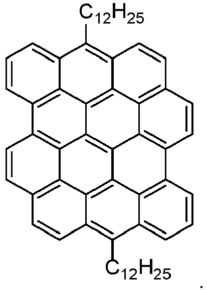

The maximum absorption wavelength in toluene (10⁻⁵ mol/L) was 611 nm (molar extinction coefficient ε = 2.03×10⁵ M⁻¹ cm⁻¹) with a high fluorescence quantum yield of 0.85.

### Example 3: Synthesis of 6, 14-bis(dimethylphenyl)dibenzo[hi,st]ovalene, DBOV-DMEP

In accordance with the reaction scheme shown in **Figure 2****,** 6,
14- bis(dimethylphenyl)dibenzo[hi,st]ovalene, which is compound **9** shown in **Figure 2** with all residues R₁ to R₇ being hydrogen atoms and with residues Ar being 2,6-dimethylenpehnyl, was prepared starting from compound **7** prepared as described in example 1. More specifically, to a solution of 5,14-diformylbenzo[*a*]dinaphtho[2,1,8-*cde*:1',2',3',4'-*ghi*]perylene prepared as described in example 1 (63 mg, 0.12 mmol) dissolved in dry THF (63 mL) was added 2,6-dimethylphenylmagnesium bromide solution (1.8 mmol, 1.8 mL, 1 N in THF). After stirring for 3 hours at room temperature, the reaction was quenched with saturated NH₄Cl solution (45 mL). The mixture was extracted with ethyl acetate (50 mL) for three times and the organic solution was combined, washed with brine (30 mL), dried over Na₂SO₄ then evaporated. After drying under vacuum for 2 hours, the residue was dissolved in anhydrous dichloromethane (60 mL) and degassed with dichloromethane vapor saturated argon flow. BF₃·OEt₂ (0.6 mL) was added and the reaction mixture was stirred overnight. After quenching with methanol (2 mL), *p*-chloranil (30 mg, 0.12 mmol) was added and the mixture was stirred for 2 hours at room temperature.

The solvent was evaporated and the residue was 46urifyied by column chromatography (*n-*hexane:DCM = 3:1) to give the product (59 mg, 72% yield) as blue solid. The product had the following characteristics:
Mp: >400 °C; ¹H NMR (300 MHz, THF-*d*₈) *δ* 9.54 (d, *J* = 8.3 Hz, 2H), 9.23 (d, *J =* 7.7 Hz, 2H), 8.59 (d, *J* = 8.2 Hz, 2H), 8.13 (d, *J* = 9.2 Hz, 2H), 8.00 (t, *J* = 7.9 Hz, 2H), 7.87 (d, *J* = 8.1 Hz, 2H), 7.70 (d, *J* = 9.1 Hz, 2H), 7.45 (dd, *J* = 6.1, 2.7 Hz, 4H), 7.40 (s, 3H), 2.00 (s, 12H); ¹³C NMR (75 MHz, THF-*d*₈) *δ* 138.8, 138.7, 135.9, 133.2, 131.8, 131.5, 130.6, 129.9, 129.9, 129.1, 128.9, 128.8, 128.1, 127.0, 126.9, 126.1, 125.5, 125.4, 124.1, 124.1, 122.5, 121.9, 20.9; HRMS (MALDI-TOF): m/z Calcd for C₅₄H₃₂: 680.2504 [M]⁺, found: 680.2487 (error = -2.5 ppm).

Thus, it was shown that the product had the formula:

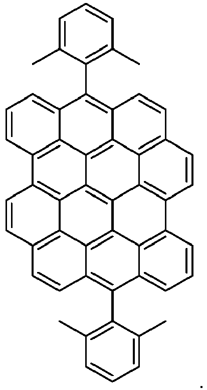

It was evaluated that this compound has a narrow absorption spectrum as well as a narrow emission spectrum. The maximum absorption wavelength in toluene (10⁻⁵ mol/L) was 609 nm (molar extinction coefficient ε = 2.83×10⁵ M⁻¹ cm⁻¹) with a high fluorescence quantum yield of 0.85.

### Example 4: Synthesis of triisopropylsilyl ethynyl substituted 6,14-dimesityldibenzo[hi,st]ovalene

### Synthesis of dibrominated 6,14-dimesityldibenzo[hi,st]ovalene

To a solution of 6,14-dimesityldibenzo[hi,st]ovalene (14 mg, 0,020 mmol) dissolved in tetrahydrofuran (70 mL) was added NBS (14 mg, 0,079 mmol). The resulting mixture was stirred at room temperature for 2 h. The solvent was evaporated and the residue was purified by column chromatography to give the product (14 mg, 84%) as blue solid. The product had the following characteristics:
Mp: >400 °C; ¹H NMR (700 MHz, THF-*d*₈) δ 10.67 (d, *J* = 8.3 Hz, 2H), 8.72 (d, *J* = 8.5 Hz, 2H), 8.34 (d, *J* = 8.8 Hz, 2H), 8.29 (d, *J* = 9.2 Hz, 2H), 7.87 (d, *J* = 9.0 Hz, 2H), 7.85 (d, *J* = 8.8 Hz, 2H), 7.27 (s, 4H), 1.93 (s, 12H); MS (MALDI-TOF): m/z Calcd for C₅₄H₃₀Br₂: 864.10 [M]⁺, found: 864.06.

Thus, it was shown that the product had the formula:

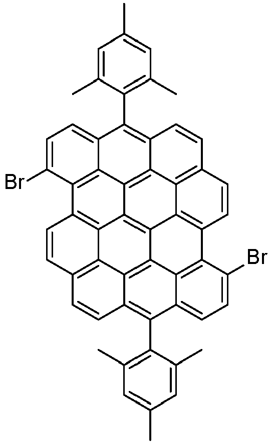

### Synthesis of triisopropylsilyl ethynyl substituted 6,14-dimesityldibenzo[hi,st]ovalene

To a Schlenk tube equipped with a stirring bar was added 3,11-dibromo-6,14-dimesityldibenzo[hi,st]ovalene prepared above (4.3 mg, 5.0 µmol), Pd(PPh₃)₄ (1.2 mg, 1.0 µmοl) and Cul (0.38 mg, 2.0 µmol). The reaction tube was evacuated and backfilled with Argon for three times before addition of tetrahydrofuran (3 mL) and triethyl amine (1 mL). After degassing by three times freeze-pump-thaw cycles, triisopropylsilyl ethynyl (TIPS) acetylene (4.5 mg, 25 µmοl) was added using a syringe. The resulting mixture was heated at 80 °C for 16 h.

After cooling down to room temperature, the solvent was evaporated and the residue was purified by column chromatography (*n*-hexane : ethyl acetate = 10:1) to give product (4.0 mg, 75%) as blue solid. The product had the following characteristics:
MS (MALDI-TOF): m/z Calcd for C₇₈H₇₆Si₂: 1068.55 [M]⁺, found: 1068.55

Thus, it was shown that the product had the formula:

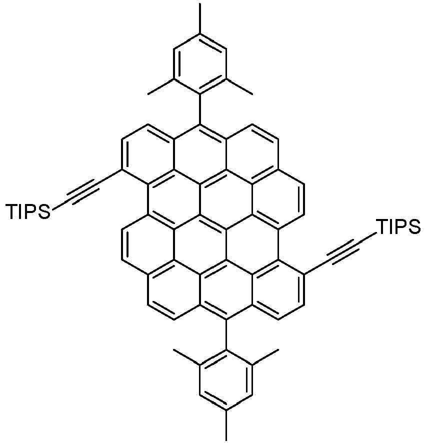

### Example 5: Synthesis of 3,11-bis(3,4,5-tris(2,5,8,11-tetraoxatridecan-13-yloxy)phenyl)-6,14-dimesityldibenzo[hi, st]ovalene

To a Schlenk tube equipped with a stirring bar was added 3,11-dibromo-6,14-dimesityldibenzo[hi,st]ovalene prepared as described in example 3 (3.0 mg, 3.46 µmol), 3,4,5-tris(tetraethylene glycol monomethyl ether)phenyl boronic acid pinacol ester (12 mg, 14 µmol), Pd(PPh₃)₄ (1.6 mg, 1.4 µmοl) and K₂CO₃ (4,8 mg, 35 µmol). The reaction tube was evacuated and backfilled with Ar for three times before a mixture of toluene/EtOH/H₂O = 2 mL/0.5 mL/0.5 mL was added. The mixture was degassed by three time freeze-pump-thaw cycles and heated at 90 °C overnight. After cooling down to room temperature, the reaction solution was extracted with ethyl acetate, washed with brine, dried over Na₂SO₄ and evaporated.

The residue was purified by column chromatography (ethyl acetate : MeOH = 10 :1 to 1:1) to give the product (5 mg, 69%) as blue oil. The product had the following characteristics:
¹H NMR (250 MHz, THF-*d*₈) δ 8.95 (d, *J* = 8.6 Hz, 1H), 8.24 (d, *J* = 8.7 Hz, 1H), 8.09 (d, *J* = 9.3 Hz, 1H), 7.95 (s, 2H), 7.73 (d, *J* = 9.2 Hz, 1H), 7.26 (s, 2H), 7.01 (s, 2H), 4.31 (t, *J* = 5.2 Hz, 2H), 3.93 - 3.84 (m, 2H), 3.75 (d, *J* = 5.5 Hz, 8H), 3.68 - 3.31 (m, 84H), 3.27 (s, 8H), 3.19 (s, 6H), 1.96 (s, 6H). MS (MALDI-TOF): m/z Calcd for C₁₂₂H₁₅₂O₃₀: 2097.04 [M]⁺, found: 2097.06

Thus, it was shown that the product had the formula:

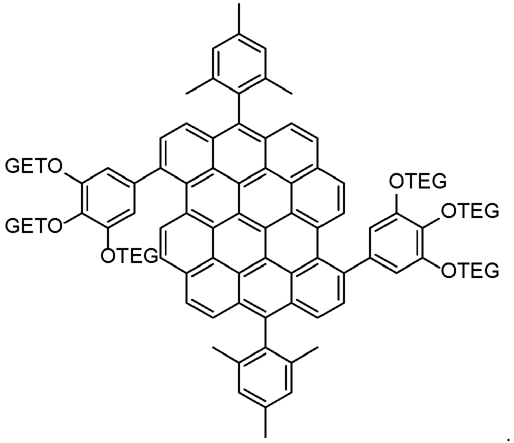

The solubility of this compound in water was evaluated at room temperature and was found to be 0.1 g/l.

### Example 6: Synthesis of 6, 14-di(triisopropylsilyl ethynyl) dibenzo[hi,st]ovalene, OBOV-TIPS

To an oven dried 25 mL Schlenk tube was added tetrahydrofuran (1.4 mL) and (triisopropylsilyl)acetylene (182 mg, 0.998 mmol). The solution was cooled down to 0°C and n-BuLi (0.6 mL, 0.96 mmol, 1.6 N in n-hexane) was added slowly. The mixture was stirred at room temperature for 30 mins and the resulting solution (1.5 mL, 0.73 mmol) was transferred to a solution of 5,14-diformylbenzo[*a*]dinaphtho[2,1,8-*cde*:1',2',3',4'-*ghi*]perylene prepared as described in example 1 (25 mg, 0.049 mmol) in dry THF (25 mL). After stirring for 21 h, the reaction was quenched by addition of saturated aqueous solution of NH₄Cl (20 mL) and extracted with ethyl acetate (20 mL) for three times. The combined organic phase was washed with brine (20 mL), dried over Na₂SO₄ and evaporated. The residue was dissolved in anhydrous dichloromethane (25 mL) and degassed with dichloromethane vapor saturated argon flow. After addition of BF₃·OEt₂ (0.025 mL), the resulting solution was stirred at room temperature for 6 h. The reaction was quenched by addition of methanol (1 mL) and p-chloranil (12 mg, 0.049 mmol) was added. The mixture was stirred for 3 h and the solvent was evaporated.

The residue was purified by recrystallization from dichloromethane and methanol to give the product (10 mg, 50% yield) as blue solid. The product had the following characteristics:
Mp: >400 °C. HRMS (MALDI-TOF): m/z Calcd for C₆₀H₅₆Si₂: 832.3921 [M]⁺, found: 832.3859 (error = -7.4 ppm).

Thus, it was shown that the product had the formula:

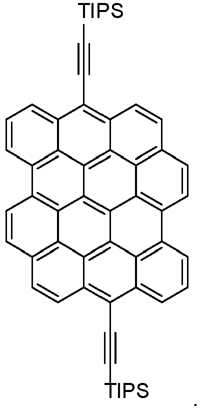

It was evaluated that this compound has a narrow absorption spectrum as well as a narrow emission spectrum. The maximum absorption wavelength in toluene (10⁻⁵ mol/L) was 647 nm (molar extinction coefficient ε = 61511 M⁻¹ cm⁻¹) with a fluorescence quantum yield of 0.67.

### Example 7: Synthesis of 6, 14-bis[3,4,5-tris(dodecoxyl)phenyljdibenzo[hi,st]ovalene

### Synthesis of 5-bromo-1,2,3-tris(dodecyloxy)benzene

5-Bromo-1,2,3-trimethoxybenzene (2.5 g, 10 mmol) was dissolved in dry DCM (30 mL), the temperature was cooled down to -78 °C and stirred for 10 minutes before BBr₃ (8.26 g, 33.0 mmol) was added dropwise. After addition, the reaction mixture was gradually warmed up to room temperature and stirred overnight. The reaction mixture was added into a 100 mL of ice water and then extracted with ethylacetate (100 mL) for three times. The organic phase was combined, washed with brine (100 mL) and dried over Na₂SO₄. After evaporation of the solvent under reduced pressure and dried under vacuum pump for 2 hours, crude 5-bromobenzene-1,2,3-triol (2.0 g, 98%) was obtained as white solid. This intermediate was used directly for the next step without characterization and further purification.

To a 100 mL Schlenk flask was added 5-bromobenzene-1,2,3-triol (2.0 g, 9.8 mmol), 1-bromododecyl (9.92 g, 40.0 mmol) and K₂CO₃ (5.52 g, 40.0 mmol). The flask was evacuated and backfilled with Ar for three times before N,N-dimethylformamide (50 mL) was added. The mixture was heated at 80 °C for 20 hours. After completion of the reaction shown by TLC (n-hexane:ethyl acetate = 10:1), the mixture was cooled down to room temperature and diluted with ethyl acetate (200 mL), washed with water (50 mL), brine (50 mL), dried over Na₂SO₄ and evaporated.

The obtained residue was purified by column chromatography (*n*-hexane) and recrystallized with ethanol to give 5-bromo-1,2,3-tris(dodecyloxy)benzene (4.5 g, 63% yield). The product had the following characteristics:
Mp: >400 °C; ¹H NMR (300 MHz, Methylene Chloride-*d*₂) *δ* 6.68 (s, 2H), 3.97 - 3.83 (m, 6H), 1.85 - 1.72 (m, 4H), 1.72 - 1.62 (m, 2H), 1.51 - 1.39 (m, 6H), 1.39 - 1.22 (m, 48H), 0.94 - 0.82 (m, 9H); ¹³C NMR (75 MHz, Methylene Chloride-d2) *δ* 154.3, 137.8, 115.8, 110.3, 73.8, 69.7, 32.4, 30.7, 30.2, 30.2, 30.1, 30.1, 30.1, 30.0, 29.8, 29.8, 29.7, 26.5, 26.5, 23.1, 14.3; FD-MS (8 kV): m/z 709.6; HRMS (MALDI-TOF): m/z Calcd for C₄₂H₇₇BrO₃: 708.5056 [M]⁺, found: 708.5005 (error = -6.5 ppm).

### Synthesis of 6,14-bis[3,4,5-tris(dodecoxyl)phenyl]dibenzo[hi,st]ovalene

To a 25 mL Schlenk tube was added magnesium turnings (27 mg, 1.1 mmol), I₂ (3 mg, 0.011 mmol) and tetrahydrofuran (1 mL). The mixture was gently heated while approximately 1 mL of 5-bromo-1,2,3-tris(dodecyloxy)benzene (568 mg, 0.8 mmol) dissolved in tetrahydrofuran (3 mL) was added. As soon as the solution became colorless, the remaining solution was added dropwise under mild reflux and stirring was continued overnight to give Grignard reagent solution. The Grignard reagent solution (4 mL) prepared above was transferred to a solution of 5,14-diformylbenzo[*a*]dinaphtho[2,1,8-*cde*:1,2',3',4'-*ghi*]perylene prepared as described in example 1 (25 mg, 0.049 mmol) in dry THF (30 mL). After stirring at room temperature for 4 h, the reaction was quenched by addition of saturated NH₄Cl solution (15 mL). After stirring for 15 mins, the solution was extracted with ethyl acetate (50 mL) for three times. The combined organic phase was washed with brine, dried with Na₂SO₄ and evaporated.

The residue obtained above was dried under vacuum for 2 h and dissolved in anhydrous dichloromethane (30 mL). After bubbling with dichloromethane vapor saturated argon flow for 15 mins, BF₃·OEt₂ (0.1 mL) was added and the stirring was continued overnight. After quenching with methanol (2 mL), p-chloranil (12 mg, 0.049 mmol) was added and the mixture was stirred for 2 hours at room temperature.

The solvent was evaporated and the residue was purified by column chromatography (n-hexane:DCM = 3:1 to 0:1) to give the product (72 mg, 85% yield) as blue solid. The product had the following characteristics:
Mp: >400 °C; ¹H NMR (300 MHz, THF-*d*₈) *δ* 9.27 (d, *J* = 8.5 Hz, 2H), 9.02 (d, *J* = 7.7 Hz, 2H), 8.36 (d, *J* = 8.4 Hz, 2H), 8.10 (d, *J* = 8.3 Hz, 2H), 7.97 (t, *J* = 9.1 Hz, 4H), 7.89 (d, *J* = 9.3 Hz, 2H), 6.87 (s, 4H), 4.16 (t, *J* = 6.2 Hz, 4H), 4.05 (t, *J* = 6.2 Hz, 8H), 1.97 - 1.79 (m, 15H), 1.69 - 1.61 (m, 4H), 1.61 - 1.15 (m, 119H), 0.97 - 0.80 (m, 18H); ¹³C NMR (75 MHz, THF-*d*₈) *δ* 139.1, 137.5, 134.9, 132.7, 132.5, 131.3, 130.3, 130.1, 128.9, 127.9, 127.5, 127.3, 126.5, 125.5, 125.1, 124.7, 124.3, 123.6, 123.4, 122.1, 121.4, 111.0, 74.0, 70.0, 33.2, 33.1, 31.9, 31.1, 31.1, 31.1, 31.0, 30.9, 30.9, 30.8, 30.7, 30.7, 30.6, 27.6, 27.4, 23.9, 23.9, 14.9, 14.9; HRMS (MALDI-TOF): m/z Calcd for C₁₂₂H₁₆₈O₆: 1729.2841 [M]⁺, found: 1729.2822 (error = -1.1 ppm).

Thus, it was shown that the product had the formula:

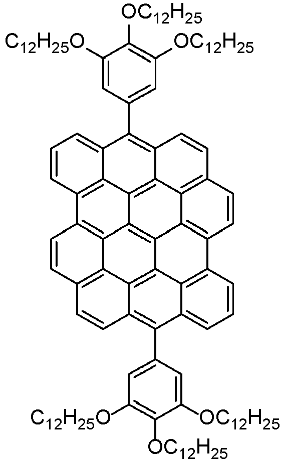

The maximum absorption wavelength in toluene (10⁻⁵ mol/L) was 609 nm (molar extinction coefficient ε = 3.85×10⁵ M⁻¹ cm⁻¹) with a high fluorescence quantum yield of 0.89.

### Example 8: Synthesis of 6, 14-diphenyldibenzo[hi,st]ovalene, DBOV-Ph

6,14-diphenyldibenzo[*hi*,*st*]ovalene was prepared analogous to example 2 by using phenylmagnesium bromide solution instead of 2,6-dimethylphenylmagnesium bromide solution. It was evaluated that this compound has a narrow absorption spectrum as well as a narrow emission spectrum.

### Example 9: Synthesis of N-hexyl fumaric acid imide group substituted 6,14-dimesityldibenzo[hi,st]ovalene

6,14-dimesityldibenzo[hi,st]ovalene was reacted with N-hexyl fumaric acid imide in diphenylether for 2 days at 275°C. The analysis showed that the product had the chemical formula C₇₆H₅₈N₂O₄ with a measured mass of 1062.4324 g/mol. Thus, the formula was confirmed to be:

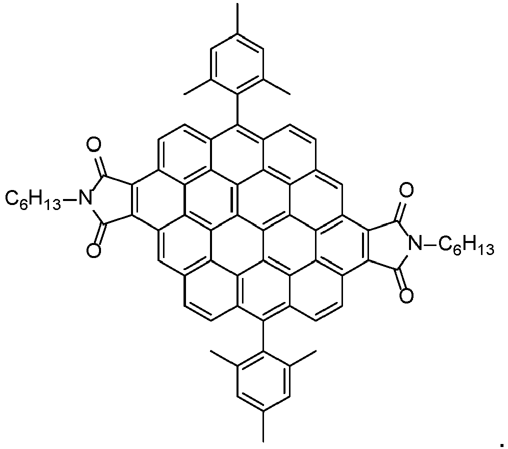

It was evaluated that this compound has a narrow absorption spectrum as well as a narrow emission spectrum.

### Example 10: 775 nm light does not photo-quench DBOV-Mes

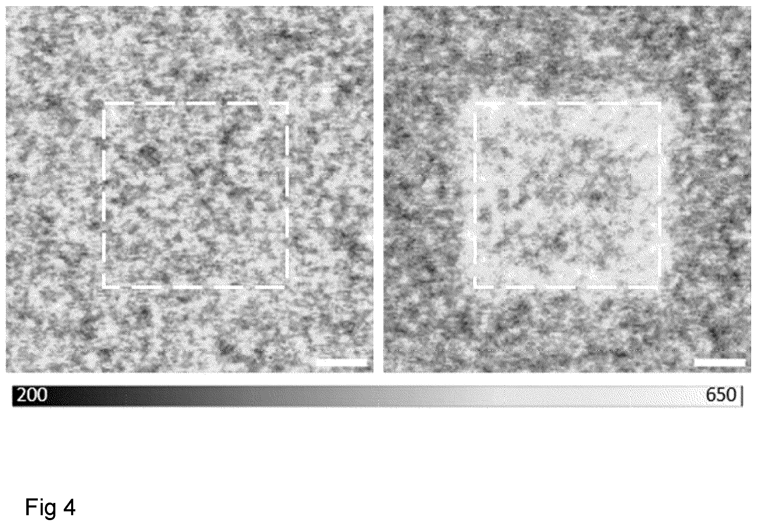

**Figure 4** demonstrates that the high-intensity beam of light at a wavelength of 775 nm has a negligible photoquenching effect on DBOV-Mes molecules. A coversplip (grid 50, #1.5, 170 µm purchased from ibidi GmbH, Germany) was sonicated in 1% Micro 90 alkaline cleaning solution (International Products Corporation) for 15 min. Then the coverslip was rinsed three times with Milli-Q water, sonicated in ethanol for 10 min, and finally dried with nitrogen flow. Afterward, the coverslip was cleaned by an oxygen-plasma cleaner (250 W, 5-10 minutes). Then, 10 µL of DBOV-Mes solution (35 µM in toluene) synthesized as set out in Example 1 were deposited on the clean coverslip using a clean glass syringe, and the solvent was allowed to evaporate.

The figure shows confocal images of a DBOV-Mes sample on a coverslip surface before (left) and after (right) being scanned by light of a 775 nm wavelength. 775 nm is too long a wavelength to excite DBOV-Mes to fluoresce. It is, however suitable as STED light to stimulate a transition of DBOV-Mes from its excited to its fluorescence-excitable state. The images we obtained with a Leica Stellaris 8 STED microscope using the microscope's 561 nm (0.22 mW) excitation laser beam. Between these confocal images, the sample was scanned by the microscopes 775 nm STED doughnut beam (140 mW) for 100 frames.

The white dashed square region indicates the STED beam scanned area. The images demonstrate that the high-intensity 775 nm STED beam has negligible photo-quenching effect on DBOV-Mes molecules. The fluorescence intensity after scanned by the STED beam was even higher than in the first image because some exposure to a 561 nm excitation beam of the STED microscope is required to find the focal plane and select the target imaging area before imaging. Therefore, before taking the first confocal image, some DBOV-Mes molecules may already be in the non-fluorecense-excitable state.

Without limiting ourselves to any particular theory, we believe that the negligible photo-quenching effect of 775 nm light is a result of the rigid π-conjugated structures with considerable aromatic stabilization present in nanographeses such as DBVO-Mes.

### Example 11: Fluroescence Recovery in DBOV-Mes

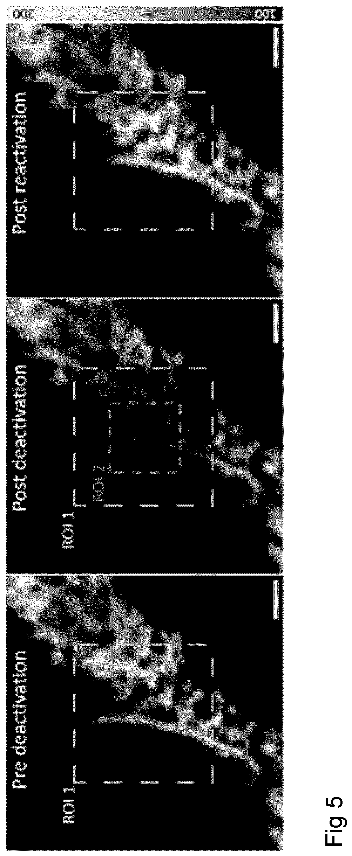

The inventors found that, surprisingly, the deactivated fluorescence of DBOV-Mes can be recovered by the STED beam. Here, the STED beam in the STED microscope is used to recover fluorescence, hereafter referred to as reactivation beam. **Figure 5** shown a series of confocal images of DBOV-Mes of cracks of on a coverslip with DBOV-Mes before (left) and after (middle) deactivation by excitation beam and after reactivation by the reactivation beam (right); the scale bars on the bottom right are 2 µm (micrometres long). The sample was prepared by the method described in Example 10. The confocal images were acquired using the 561 nm (0.22 mW) laser beam of the STED microscope, to scan 512 pixel × 512 pixel at 0.076 µm/pixel resolution. A HyD X4 detector for wavelength of 600 nm to 748 nm was used with a scan speed 100 Hz, a pixel dwell time of 15.3875 µs and a line accumulation of 2.

The white dashed square region indicates the region of interest, and "ROI 1" indicates the deactivated are after 100 consecutive frames of confocal imaging. Even though the photostability of nanographene is superior to that of organic fluorophores, their fluorescence intensity still decreases gradually due to the excitation beam. Nearly 50 % of the fluorescence intensity was quenched as can be seen on the middle image of **Figure 5****.** The total collection time is 137.041 s.

For reactivation, the red dahed square region indicated as "ROI 2" was then scanned with the 775 nm (600 mW) doughnut-shape STED beam microscope for 5 frames with 64 pixel × 64 pixels at a 55.916 nm/pixel resolution. At a scan speed of 100 Hz, a pixel dwell time of 102.375 µs and a line accumulation of 2, the total reactivation time is 5.614 s. The right image of **Figure 5** shows that all fluorescence was recovered. Even though the reactivation beam scanned only a small region ROI 2, molecules in the larger area ROI 1were also reactivated by receiving some photons.

Furthermore, this deactivation and reactivation process is repeatable. After 7 cycles of repeated short-term deactivation and reactivation (similar to the STED imaging setup), no significant reduction in fluorescence was observed, whereas for comparison, in the absence of reactivation, there was a 30 % reduction in fluorescence.

Without being limited to a particular theory, the inventors believe that the reversible photo-quenching observed in nanographenes is the result of the molecule releasing one electron by photo-ionization to form the radical cation that constitutes a non-luminescent states and is stable unless induced to return to the excited state by (re)combining with the electron. The inventors further believe that the energy of a photons of the excitation light is insufficient to cause photo-ionization. Rather, photo-ionization is caused by rarer resonance-enhanced two-photon ionization. **Figure 6** illustrates this mechanism using DBOV-Mes as an example. A single photon of the excitation light excites a molecule in its ground state ("DBOV-Mes") to assume its excited state ("DBVO-Mes*"). From there, it can return to its ground state by spontaneous emission of fluorescence light. In contrast, resonance-enhances two-photon excitation photo-ionizes the molecule to form a radical cation ("DBVO-Mes*+"). A photon of the 775 nm light of the STED beam can induce the return to the excited state by (re)combining the radical cation with the electron.

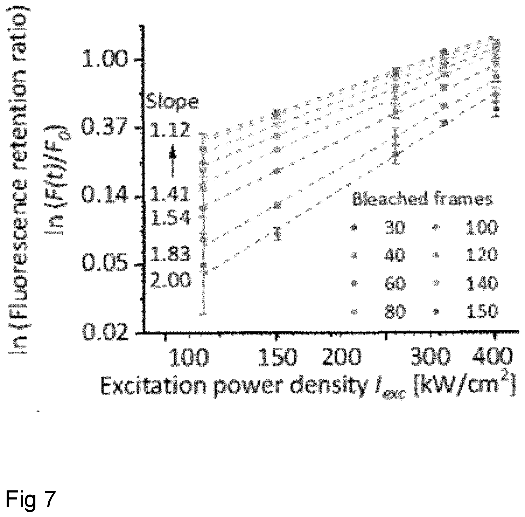

The two-photon photo-ionization mechanism is supported by the findings illustrated in **Figure 7****.** The figure analyses the fluorescence ratio (ie, the fraction of remaining fluorescence after a certain number of confocal images taken with the STED microscope using only the 561 nm excitation laser beam but not the SED laser beam) of DBOV-Mes as a function of the power density of the excitation laser light. A linear plotted curve with a slope of 2 was obtained in the region of few images, which corresponds to shorter durations of exposure to the excitation light. This suggests a two-photon ionization process, because the time dependence of the number of molecules entering the non-fluorescence-excitable state is exponential, and the decay constant in the exponent in a two-photon process is proportional to the square of the excitation laser density.

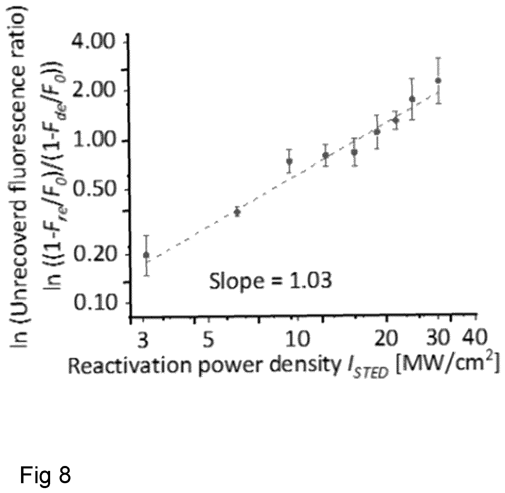

That a single-photon returns the radical cation to the excited state is supported by the findings illustrated in **Figure 8****.** The figure shows the fluorescence reactivation rate of DBOV-Mes as a function of the intensity of the 775 nm STED laser beam used for recovery as an Inln-In plot. The slope of about 1 suggests one photon reactivation process, because in this case, too, the time dependence of the number of molecules entering the fluorescence-excitable state is exponential, but the exponential decay constant in a one-photon process is only linearly probational to the 775 nm STED laser density.

### Example 12: Fluorescence retention in STED microscopy

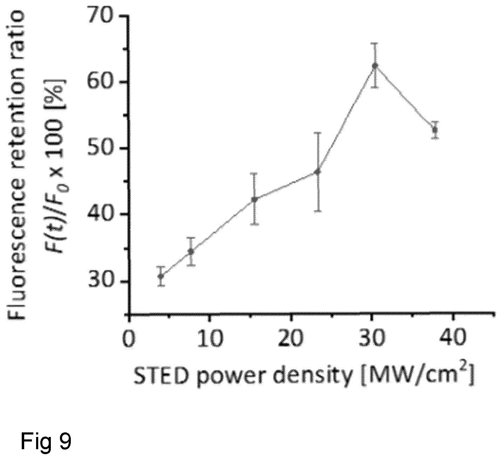

**Figure 9** shows the results of measurements of the fluorescence retention ratio achieved in STED microscopy with Leica Stellaris 8 STED microscope. The fluorescence retention ratio is the ratio of the intensitiy of the fluorescence of DBOV-Mes in the 150 consecutive image of the same imaging area as compare to the intensity in the first image. For each image, the imaging area was scanned with the Gaussian-shaped spot of the microscope's 561 nm excitation beam surrounded by the donut-shaped 775 nm STED beam, which doubles as recovery light. The figure plots the fluorescence retention ratio as a function of the power density of the STED light. The figure shows that up to 30 MW/cm³, the fluorescence retention increase as the recovery light becomes stronger. Only when the reactivation beam intensity approaches 38 MW/cm², the fluorescence retention decreases again, possibly due to the involvement of additional nonlinear processes. For example, when increasing the reactivation beam peak intensity, two-photon fluorescence was observed, which may compete might single molecule recovery process. The maximum fluorescence retention of only 62 % was achieved. The inventors attribute this to the fact that due to the donut shape of the STED light, only a fraction of the light reached those fluorophores actually measured in the STED scan. In an experiment (not shown), in which the Gaussian-shaped spots of the excitation beam and the Gaussian-shaped rather than donut-shaped spot of the recovery beam coincided, full fluorescence retention was observed.

### Example 13: Environment can impede recovery

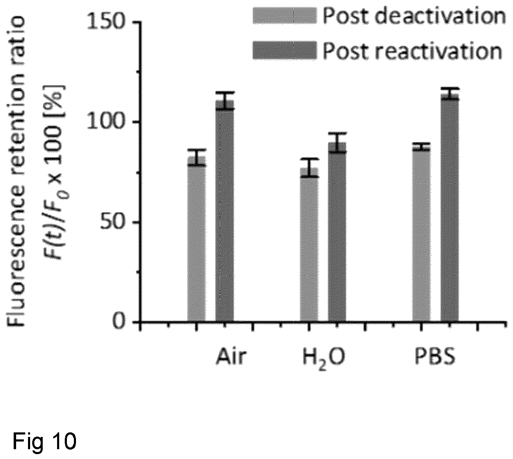

As can be seen from **Figure 10****,** the nanographene's environment can impede recovery. The figure shows the result of an experiment essentially as described in Example 11 but with the DBOV-Mes being provided in three different environments: Air, water (H₂O) and phosphate buffered saline solution (PBS); moreover, the power of the STED beam was reduced to 450 MW. The sample of DBOV-Mes in air was prepared by the same method as described in Example 10. The samples of DBOV-Mes in water and PBS were prepared by an additional step of dropping 10 µL of water or PBS, respectively, on the cover slid after evaporation of toluene solvent. Despite the somewhat lower STED power, all the fluorescence can be recovered in samples of DBOV-Mes in air and PBS. In water, DBOV-Mes was unable to achieve full reactivation. The inventors speculate that this may be due to the electron shed by the DBOV-Mes molecule being captured by the water and thus made unavailable to the DBOV-Mes molecule for recombination.

### Example 14: Preparing nanographene-based fluorescent nanoparticles

Nanographene-based fluorescent nanoparticles can be applied for example in bio-labelling and high-resolution imaging. Fluorescent nanoparticles comprising the nanographene DBOV-Mes were prepared by nanoprecipitation method using the amphiphilic polymer (DSPE-PEG2000-COOH). The inventors followed the protocol described By Zhao et al in "Water-Soluble Nanoparticles with Twisted Double [7] Carbohelicene for Lysosome-Targeted Cancer Photodynamic Therapy ", Small, 2022, 18, 2105365. The parts of this publication describing the protocol are herewith incorporated into the present disclosure by reference. The inventors modified the protocol by using DSPE-PEG2000-COOH to replace the DSPE-PEG2000-OCH3 polymer.

### Example 15: Preparing nanographene fluorescent beads

Fluorescent beads comprising the nanographenes DDBP-Mes, DBOV-Mes, DBDNC, TBDNP,and FZ1 were prepared by a methods that involves the copolymerization of styrene and divinylbenzene. The inventors followed the protocol described By Lee et al in "Dye-labelled polystyrene latex microspheres prepared via a combined swelling-diffusion technique", J Colloid Interface Sci. 2011;363(1):137-144. The parts of this publication describing the protocol are herewith incorporated into the present disclosure by reference. The protocol of X was merely modified insofar as DDBP-Mes, DBVO-Mes, DBDNC, TBDNP,and FZ1 were used as the fluorophore.

### Example 16: Preparing nanographene labelled colloidal vesicles

Liposomes and polymersomes are colloidal vesicles that are self-assembled from amphiphilic lipids and block-copolymers, respectively. Nanographene DBOV-Mes labelled colloidal vesicles (liposomes and polymersomes) were prepared by the thin-film hydration method followed by extrusion. The inventors prepared liposomes followed the protocol described By Gai et al in "A bio-orthogonal functionalization strategy for site-specific coupling of antibodies on vesicle surfaces after self-assembly", Polym. Chem., 2020,11, 527-540. The inventors prepared polymersomes followed the protocol described By Ghanam et al in "Extracellular vesicles transfer chromatin-like structures that induce non-mutational dysfunction of p53 in bone marrow stem cells", Cell Discov 9, 12 (2023). The parts of this publication describing the protocol are herewith incorporated into the present disclosure by reference.

## Claims

1. A method of returning a nanographene fluorophore molecule from its non-fluorescence-excitable state to its fluorescence-excitable state, the method comprising the step of supplying the fluorophore molecule with electromagnetic radiation to stimulate a transition from the non-fluorescence-excitable state to the fluorescence-excitable state.

2. A method of improving the fluorescence of a plurality of nanographene fluorophore molecules, some of which fluorophore molecules are in their non-fluorescence-excitable state, the method comprising the step of supplying the fluorophore molecules with electromagnetic radiation to stimulate in one or more of the fluorophore molecules that are in their non-fluorescence-excitable state a transition from the non-fluorescence-excitable state to the fluorescence-excitable state.

3. The method of claim 1 or 2, **characterised in that** the fluorophore molecule(s) is/are irradiated with electromagnetic radiation to stimulate the transition from the non-fluorescence-excitable state to the fluorescence-excitable state.

4. A method of generating fluorescence with nanographene fluorophore molecule(s), the method comprising:
- irradiating the fluorophore molecule(s) with electromagnetic radiation at an excitation wavelength suitable for exciting the fluorophore molecule(s) to fluoresce if in its/their fluorescence-excitable state; and
- irradiating the fluorophore molecule(s) with electromagnetic radiation at a recovery wavelength suitable for returning the fluorophore molecule(s) to its/their fluorescence-excitable state if in its/their non-fluorescence-excitable state.

5. The method of claim 4, **characterised in that** the recovery wavelength is different from the excitation wavelength.

6. The method of claim 4 or 5, **characterised in that** the irradiating of the fluorophore molecule(s) with electromagnetic radiation at an excitation wavelength occurs simultaneously with the irradiating the fluorophore molecule(s) with electromagnetic radiation at a recovery wavelength.

7. The method of claims 5 or 6, **characterised in that** the recovery wavelength is a wavelength un-suitable for exciting the fluorophore molecule(s) to fluoresce if in its/their fluorescence-excitable state.

8. Use of a nanographene fluorophore as a fluorophore in stimulated emission depletion microscopy.

9. The use of claim 8, **characterised in that** the wavelength of the STED light is chosen to have a recovery wavelength suitable for returning the fluorophore molecule(s) to its/their fluorescence-excitable state if in its/their non-fluorescence-excitable state.

10. Use of a nanographene fluorophore as a fluorophore in calibrating a fluorescence imaging apparatus.

11. A method comprising the steps of:
- transitioning a fluorophore from its fluorescence-excitable state to its non-fluorescence-excitable state by means of absorbing two photons and
- returning the fluorophore molecule from its non-fluorescence-excitable state to its fluorescence-excitable state by supplying the fluorophore molecule with electromagnetic radiation to stimulate a transition from the non-fluorescence-excitable state to the fluorescence-excitable state.

12. A recoverable fluorescence material comprising a fluorophore molecules.

13. The recoverable fluorescence material of claim 12 comprising nanographene molecules as the fluorophore molecules.

14. The recoverable fluorescence material of claim 12 or 13, **characterised in that** it is a fluorescent bead, liposome or nanoparticle comprising the fluorophore.
